# EUROPEAN PATENT APPLICATION

(11) **EP 4 661 149 A1**
(43) Date of publication of application: **10.12.2025**
(21) Application number: 24847507.1
(22) Date of filing: 23.01.2024
(51) Int. Cl.: H01M 10/0587

(54) **BATTERY CELL, BATTERY, ELECTRIC DEVICE, AND PROCESSING METHOD FOR BATTERY CELL**

(30) Priority: 28.07.2023 CN 202310942755
(71) Applicant: Contemporary Amperex Technology Co., Limited, Ningde, Fujian 352100 (CN)
(72) Inventor: WANG, Qinglin, Ningde, Fujian 352100 (CN); ZHANG, Jie, Ningde, Fujian 352100 (CN); HUANG, Naixing, Ningde, Fujian 352100 (CN); CAO, Junqi, Ningde, Fujian 352100 (CN)
(74) Representative: Ziebig Hengelhaupt Intellectual Property Attorneys Patentanwaltskanzlei PartGmbB
(86) International application number: PCT/CN2024/073696
(87) International publication number: WO 2025/025538

(57) **Abstract**

The present application is applicable to the technical field of batteries (100), and provides a battery cell (10), a battery (100), an electric device, and a processing method for a battery cell (10). The battery cell (10) comprises an electrode assembly (11) and active structures (12). The electrode assembly (11) comprises a positive electrode sheet (111) and a negative electrode sheet (112), wherein the positive electrode sheet (111) comprises first straight segments (1111) and first bent segments (1112), and the negative electrode sheet (112) comprises second straight segments (1121) and second bent segments (1122), the first straight segments (1111) and the second straight segments (1121) are alternately stacked to form straight portions (1101), and the first bent segments (1112) and the second bent segments (1122) are alternately stacked to form corner portions (1102). At least some of the active structures (12) are provided between the first bent segments (1112) and the second bent segments (1122) adjacent to the inner sides of the first bent segments (1112). In this way, the problem of ion precipitation at the corner portions can be solved.

## Description

### CROSS-REFERENCE

The present application claims priority to Chinese Patent Application No. 202310942755.2 filed with China National Intellectual Property Administration on July 28, 2023 and entitled "BATTERY CELL, BATTERY, ELECTRIC DEVICE, AND PROCESSING METHOD FOR BATTERY CELL", which is incorporated herein by reference in its entirety.

### TECHNICAL FIELD

The present application relates to the technical field of batteries, and in particular, to a battery cell, a battery, an electric device, and a processing method for a battery cell.

### BACKGROUND

In some cases, an electrode assembly is mainly formed by stacking and winding a positive electrode plate and a negative electrode plate, such that the electrode assembly can be divided into a straight portion and two corner portions, and the two corner portions are disposed on two opposite sides of the straight portion respectively.

For the corner portions of the electrode assembly, the positive electrode plate, the negative electrode plate, and a separator are all disposed in a bent manner, such that the winding length of the positive electrode plate is greater than that of the negative electrode plate located on the inner side of the positive electrode plate, which makes the capacity ratio of the negative electrode plate located on the inner side of the positive electrode plate to the positive electrode plate insufficient. Therefore, in the charging process of a battery cell, ions de-intercalated from the positive electrode plate migrate to the negative electrode plate on the inner side, and the negative electrode plate on the inner side does not have enough space to contain and intercalate the ions, such that the problem of ion precipitation at the corner portions is caused, and the charging and discharging cycle and the reliability of the battery cell are influenced.

### SUMMARY

In view of the above problems, an objective of embodiments of the present application is to provide a battery cell, a battery, an electric device, and a processing method for a battery cell, which can alleviate the problem of ion precipitation at the corner portions of an electrode assembly.

The technical solutions used in the embodiments of the present application are as follows:
In a first aspect, an embodiment of the present application provides a battery cell. The battery cell includes:
an electrode assembly, including a positive electrode plate and a negative electrode plate, where the positive electrode plate and the negative electrode plate are stacked and wound; the electrode assembly includes a straight portion and two corner portions disposed on two opposite sides of the straight portion respectively; the positive electrode plate includes first straight segments and first bent segments connected to the first straight segments, the negative electrode plate includes second straight segments and second bent segments connected to the second straight segments, the first straight segments and the second straight segments are alternately stacked to form the straight portion, and the first bent segments and the second bent segments are alternately stacked to form the corner portions; and
an active structure, disposed between the first bent segments and the second bent segments adjacent thereto along an inner side, and configured to intercalate ions.

According to the battery cell provided by the embodiment of the present application, the active structure configured to intercalate ions is disposed between the first bent segments of the electrode assembly and the second bent segments adjacent thereto along the inner side, such that ions de-intercalated from the first bent segments can be intercalated into the active structure in addition to the second bent segments, and thus the problem of ion precipitation caused by the ions excessively reaching the second bent segments can be alleviated. In this way, the problem of ion precipitation at the corner portions of the electrode assembly can be alleviated, and thus the charging and discharging cycle and the reliability of the battery cell can be improved.

In some embodiments, the positive electrode plate includes three or more first bent segments spaced apart from each other along a winding direction of the positive electrode plate; and along the winding direction of the positive electrode plate, the active structure is disposed at least between an inner side of the first of the first bent segments to an inner side of the third of the first bent segments and corresponding adjacent second bent segments.

The active structure is disposed at the first to third folds of the positive electrode plate, such that the problem of ion precipitation at the portion of the electrode assembly where ion precipitation is serious can be alleviated, thereby enabling overall alleviation of the problem of ion precipitation of a battery, and thus improving the charging and discharging cycle performance and the reliability of the battery.

In some embodiments, the electrode assembly further includes a separator, and the separator is stacked between the positive electrode plate and the negative electrode plate.

The active structure is disposed between the first bent segments and the separator adjacent thereto along the inner side, and/or the active structure is disposed between the second bent segments and the separator adjacent thereto along an outer side.

In this way, the arrangement of the active structure at the corner portions is made very flexible.

In some embodiments, the active structure includes a substrate and an active layer disposed on the substrate and configured to intercalate ions, and at least part of the substrate and at least part of the active layer are both disposed between the first bent segments and the second bent segments adjacent thereto along the inner side.

By arranging the active structure to include the substrate and the active layer disposed on the substrate, ions can be intercalated into the active structure through the active layer, thereby enabling the alleviation of the problem of ion precipitation at the corner portions.

In some embodiments, the active structure further includes an adhesive layer, and the substrate and/or the active layer are/is provided with the adhesive layer; the electrode assembly further includes the separator, and the separator is stacked between the positive electrode plate and the negative electrode plate.

At least part of the active structure is disposed between the first bent segments and the separator adjacent thereto along the inner side, and bonded to the first bent segments and/or the separator by the adhesive layer, or at least part of the active structure is disposed between the second bent segments and the separator adjacent thereto along the outer side, and bonded to the second bent segments and/or the separator by the adhesive layer.

By arranging the adhesive layer, the active structure can be stably fixed to the corner portions, and the problem that the active structure falls off can be alleviated, thereby better alleviating the problem of ion precipitation at the corner portions. Moreover, the active structure is bonded to the corner portions by the adhesive layer, such that the fixing process of the active structure on the corner portions is very simple and easy to achieve.

In some embodiments, the adhesive layer includes a plurality of adhesive portions spaced apart from each other on the active layer or the substrate; and the adhesive portions of the single adhesive layer are configured to bond the first bent segments, the separator, or the second bent segments.

By such arrangement, the ions de-intercalated from the first bent segments can be intercalated into the active structure more quickly, such that the problem that the ions de-intercalated from the first bent segments excessively reach the second bent segments can be better alleviated, and thus the problem of ion precipitation at the corner portions can be alleviated.

In some embodiments, the adhesive portions are disposed on a side of the active structure proximal to the first bent segments.

By such arrangement, the ions de-intercalated from the first bent segments can be intercalated into the active structure more quickly, such that the problem that the ions de-intercalated from the first bent segments excessively reach the second bent segments can be better alleviated, and thus the problem of ion precipitation at the corner portions can be alleviated.

In some embodiments, the adhesive layer is disposed on the active layer and bonded to the first bent segments.

By such arrangement, the active layer can be proximal to the inner side of the first bent segments as much as possible, such that the efficiency of intercalating the ions de-intercalated from the first bent segments into the active layer can be improved, thereby effectively alleviating the problem of ion precipitation at the corner portions. Moreover, the active structure is bonded to the first bent segments, such that the ions de-intercalated from the first bent segments can be intercalated into the active layer conveniently, thereby effectively alleviating the problem of ion precipitation at the corner portions.

In some embodiments, the adhesive layer is a conductive adhesive layer and disposed more proximal to the first bent segments than the active layer.

By such arrangement, the ions de-intercalated from the first bent segments can be rapidly intercalated into the active layer under the conductive environment of the adhesive layer, such that the efficiency of reaction between the ions and the active layer can be improved, and thus the problem of ion precipitation at the corner portions can be effectively alleviated.

In some embodiments, the adhesive layer and the active layer are disposed on two opposite sides of the substrate respectively, the adhesive layer is bonded to the separator, and the active layer is in contact with the first bent segments.

By such arrangement, the active layer can be directly in contact with the inner side of the first bent segments on the basis that the active structure can be bonded to the corner portions, such that the ions de-intercalated from the first bent segments can be directly intercalated into the active layer, that is, the efficiency of intercalating the ions de-intercalated from the first bent segments into the active layer can be improved, thereby facilitating the alleviation of the problem of ion precipitation at the corner portions.

In some embodiments, the active layer has an adhesive property; the electrode assembly further includes the separator, and the separator is stacked between the positive electrode plate and the negative electrode plate; and the single active layer is bonded to the first bent segments, the separator, or the second bent segments.

By such arrangement, the adhesive layer does not need to be additionally provided, such that the active structure features a very simple structure. Moreover, the ions de-intercalated from the first bent segments can be rapidly intercalated into the active layer.

In some embodiments, the electrode assembly further includes the separator, and the separator is stacked between the positive electrode plate and the negative electrode plate; and the substrate has an insulating property and is disposed between the first bent segments and the separator adjacent thereto along the inner side, and the active layer is disposed on a side of the substrate distal to the first bent segments, and conductively connected to the negative electrode plate.

By such arrangement, the ions can be intercalated into the active structure in the charging process of the battery and de-intercalated in the discharging process of the battery, such that the utilization rate of the ions in the battery can be improved on the basis that the problem of ion precipitation can be alleviated, thereby enabling the improvement of the charging and discharging capacity of the battery.

In some embodiments, the electrode assembly further includes the separator, and the separator is stacked between the positive electrode plate and the negative electrode plate; and the active structure includes an active layer configured to intercalate ions, and at least part of the active layer is disposed between the first bent segments and the second bent segments adjacent thereto along the inner side and disposed on the separator.

By directly arranging the active layer on the separator, the arrangement of the substrate is not required for the active structure. This can reduce the volume and mass of the active structure, and thus facilitate the improvement of the energy density of the battery.

In some embodiments, a material of the active layer includes an active material, a conductive agent, and a binder.

By such arrangement, the active layer has a property of intercalating the ions, such that the ions can be intercalated to alleviate the problem of ion precipitation at the corner portions. Moreover, the formation of the active layer on the substrate or the separator is also facilitated.

In some embodiments, the electrode assembly further includes a separator, and the separator is stacked between the positive electrode plate and the negative electrode plate.

At least part of the active structure is disposed between the second bent segments and the separator adjacent thereto along the outer side, and conductively connected to the negative electrode plate.

By such arrangement, the ions de-intercalated from the first bent segments can be intercalated into the active structure in the charging process of the battery cell, and can also be de-intercalated in the discharging process of the battery cell and intercalated into the first bent segments, such that the charging and discharging capacity of the battery cell can be improved.

In some embodiments, the active structure includes the active layer configured to intercalate ions, and at least part of the active layer is disposed between the first bent segments and the second bent segments adjacent thereto along the inner side.

The active structure further includes a metal piece disposed on the active layer, and the metal piece is conductively connected to the negative electrode plate; or, the active layer is in conductive contact with the second bent segments.

By allowing the metal piece to be conductively connected to the negative electrode plate, or allowing the active layer to be in conductive contact with the second bent segments, the active structure can keep the same potential with the negative electrode plate, which enlarges the potential difference between the positive electrode plate and the active structure, and increases the reaction rate between the ions and the active structure, thereby improving the efficiency of intercalating the ions de-intercalated from the first bent segments into the active structure.

In some embodiments, an orthographic projection of the active structure on the first bent segments covers the first bent segments along the winding direction of the positive electrode plate;
and/or the orthographic projection of the active structure on the first bent segments covers the first bent segments along a first direction, and the positive electrode plate and the negative electrode plate are wound around a first axis parallel to the first direction.

By adopting the above technical solutions, the active structure can cover the inner side of the first bent segments as much as possible, such that the ions de-intercalated from the first bent segments can be better intercalated, and thus the problem of ion precipitation at the corner portions can be alleviated.

In some embodiments, the active structure has a dimension of 10 mm to 20 mm along the winding direction of the positive electrode plate.

By such arrangement, the active structure can better cover the inner side of the first bent segments along the winding direction of the positive electrode plate, thereby better intercalating the ions de-intercalated from the first bent segments.

In some embodiments, the active structure is a sheet and has a thickness dimension ranging from 20 µm to 40 µm.

By such arrangement, the thickness of the active structure is designed reasonably, and the thickness of the active structure is made to be small on the basis that the ions de-intercalated from the first bent segments can be efficiently intercalated, such that the space occupied by the active structure in the electrode assembly is reduced as much as possible, thereby being conducive to maintaining a high energy density of the battery.

In a second aspect, an embodiment of the present application provides a battery. The battery includes a battery cell.

According to the battery provided by the embodiment of the present application, the problem of ion precipitation of the battery cell can be alleviated by adopting the battery cell involved in each embodiment described above, thereby being conducive to improving the charging and discharging cycle performance and the reliability of the battery.

In a third aspect, an embodiment of the present application provides an electric device. The electric device includes a battery cell or a battery.

According to the electric device provided by the embodiment of the present application, the battery involved above is adopted, which is conducive to improving the charging and discharging cycle performance and the reliability of the battery.

In a fourth aspect, an embodiment of the present application provides a processing method for a battery cell. The method includes:
performing die cutting on a positive electrode plate;
providing an active structure on an inner side of first bent segments of the positive electrode plate; and
winding the positive electrode plate and a negative electrode plate.

According to the processing method for the battery cell provided by the embodiment of the present application, the problem of ion precipitation at the corner portions of the battery cell can be alleviated, thereby being conducive to improving the charging and discharging cycle performance and the reliability of the battery cell.

In a fifth aspect, an embodiment of the present application provides a processing method for a battery cell. The method includes:
performing die cutting on a negative electrode plate;
providing an active structure on an outer side of second bent segments of the negative electrode plate; and
winding a positive electrode plate and the negative electrode plate.

According to the processing method for the battery cell provided by the embodiment of the present application, the problem of ion precipitation at the corner portions of the battery cell can be alleviated, thereby being conducive to improving the charging and discharging cycle performance and the reliability of the battery cell.

In a sixth aspect, an embodiment of the present application provides a processing method for a battery cell. The method includes:

winding a positive electrode plate and a negative electrode plate, and providing an active structure between an inner side of first bent segments of the positive electrode plate and an outer side of second bent segments of the negative electrode plate in the process of winding the positive electrode plate and the negative electrode plate.

According to the processing method for the battery cell provided by the embodiment of the present application, the problem of ion precipitation at the corner portions of the battery cell can be alleviated, thereby being conducive to improving the charging and discharging cycle performance and the reliability of the battery cell.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or exemplary technologies are briefly described below. Apparently, the drawings in the following description illustrate merely some embodiments of the present application, and those of ordinary skill in the art may still derive other drawings from these drawings without creative efforts.
FIG. 1 is a schematic diagram of a vehicle according to some embodiments of the present application;
FIG. 2 is a schematic exploded view of a battery according to some embodiments of the present application;
FIG. 3 is a schematic exploded view of a battery cell according to some embodiments of the present application;
FIG. 4 is a cross-sectional view of matching of an electrode assembly and an active structure of a battery cell according to some embodiments of the present application;
FIG. 5 is an enlarged view of part A in FIG. 4;
FIG. 6 is an expanded cross-sectional view of an active structure of a battery cell according to some embodiments of the present application;
FIG. 7 is an expanded cross-sectional view of an active structure of a battery cell according to some other embodiments of the present application;
FIG. 8 is an expanded cross-sectional view of an active structure of a battery cell according to yet some other embodiments of the present application;
FIG. 9 is an expanded cross-sectional view of an active structure of a battery cell according to still some other embodiments of the present application;
FIG. 10 is a partial cross-sectional view of a corner portion and an active structure of a battery cell according to some embodiments of the present application; and
FIG. 11 is a flowchart of a processing method for a battery cell according to some embodiments of the present application.

Reference numerals in the drawings have the following meanings:
1000-vehicle; 100-battery; 200-controller; 300-motor; 10-battery cell; 20-case; 21-first portion; 22-second portion; 11-electrode assembly; 1101-straight portion; 1102-corner portion; 111-positive electrode plate; 1111-first straight segment; 1112-first bent segment; 1113-positive electrode tab; 112-negative electrode plate; 1121-second straight segment; 1122-second bent segment; 1123-negative electrode tab; 113-separator; 1131-third straight segment; 1132-third bent segment; 12-active structure; 121-substrate; 122-active layer; 123-adhesive layer; 1231-adhesive portion; 124-metal piece; 13-shell; 131-housing; 132-end cover; z-first direction; x-second direction; y-third direction; 1-first axis; H1-first dimension; and H2-second dimension.

### DETAILED DESCRIPTION

The embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are intended to explain the present application. They should not be construed as limiting the present application.

In the description of the present application, it should be understood that the terms "length", "width", "upper", "lower", "front", "rear", "left", "right", "vertical", "horizontal", "top", "bottom", "inner", "outer", or the like indicate orientations or positional relationships based on those shown in the drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

In addition, the terms "first" and "second" are used for description only and are not to be construed as indicating or implying relative importance or to implicitly indicate the number of technical features indicated. Therefore, a feature defined with "first" or "second" may explicitly or implicitly include one or more such a feature.

In the description of the present application, "a plurality of" means two or more, and "two or more" includes two, unless otherwise specifically defined. Correspondingly, "a plurality of groups" means two or more (including two) groups.

In the description of the present application, unless otherwise clearly specified and defined, the terms "mount", "interconnect", "connect", "fix", or the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the aforementioned terms in the present application can be understood according to specific conditions.

In the description of the present application, the term "and/or" is merely a way to describe the associative relationship between associated objects, indicating that there are three possible relationships. For example, "A and/or B" may denote: the presence of A alone, the presence of both A and B, and the presence of B alone. In addition, the character "/" herein generally indicates an "or" relationship between the associated objects before and after the "/".

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

In the related art, a battery cell includes an electrode assembly, and the electrode assembly is a component where the electrochemical reaction occurs in the battery cell. The electrode assembly includes a positive electrode plate, a negative electrode plate, and a separator.

For a wound electrode assembly, a positive electrode plate and a negative electrode plate are stacked and wound. The separator is arranged between the positive electrode plate and the negative electrode plate so as to achieve the insulation between the positive electrode plate and the negative electrode plate.

In some cases, the electrode assembly can be divided into a straight portion and two corner portions, and the two corner portions are disposed on two opposite sides of the straight portion respectively. Specifically, the positive electrode plate, the negative electrode plate, and the separator are all provided with straight segments and bent segments connected to the straight segments. The straight segments of the positive electrode plate, the straight segments of the negative electrode plate, and the straight segments of the separator are disposed straightly and are stacked to form the above straight portion of the electrode assembly. The bent segments of the positive electrode plate, the bent segments of the negative electrode plate, and the bent segments of the separator are disposed in a bent manner, and are stacked to form the above corner portions of the electrode assembly.

In the charging process of the battery cell, ions are de-intercalated from the positive electrode plate, migrate to the negative electrode plate, and are intercalated into the negative electrode plate. Taking a lithium-ion battery as an example, in the charging process of the battery cell, lithium ions are de-intercalated from the positive electrode plate and migrate to the negative electrode plate to be intercalated into the negative electrode plate.

However, for the corner portions of the electrode assembly, a winding length of the positive electrode plate is greater than that of the negative electrode plate on the inner side of the positive electrode plate, which makes the capacity ratio of the negative electrode plate on the inner side of the positive electrode plate to the positive electrode plate insufficient. Therefore, when the ions de-intercalated from the positive electrode plate at the corner portions migrate to the negative electrode plate on the inner side, the negative electrode plate on the inner side of the negative electrode plate does not have enough space to contain and intercalate the lithium ions. That is, the lithium ions excessively reach the negative electrode plate on the inner side, resulting in lithium plating of the negative electrode plate on the inner side. Therefore, the problem of lithium plating exists at the corner portions, which affects the charging and discharging cycle and reliability of the battery cell.

In view of the above, embodiments of the present application provide a battery cell, a battery, an electric device, and a processing method for a battery cell. An active structure configured to intercalate ions is disposed between first bent segments and second bent segments adjacent thereto along an inner side, such that ions de-intercalated from the first bent segments can be intercalated into the active structure in addition to the second bent segments, and thus the problem of ion precipitation caused by the ions excessively reaching the second bent segments can be alleviated. In this way, the problem of ion precipitation at the corner portions of the electrode assembly can be alleviated, and thus the charging and discharging cycle and the reliability of the battery cell can be improved.

In some embodiments, the battery cell involved in the embodiments of the present application may be used in an electric device that uses a battery cell or a battery as a power source. The battery involved in the embodiments of the present application may be used in an electric device that uses the battery as a power source.

The electric device may be, but is not limited to, a mobile phone, a tablet, a laptop computer, an electric toy, an electric tool, an electric bike, an electric car, a ship, a spacecraft, or the like. The electric toy may include a stationary or mobile electric toy, such as a game console, an electric car toy, an electric ship toy, and an electric airplane toy, and the spacecraft may include an airplane, a rocket, a space shuttle, a spaceship, or the like. The vehicle may be a fuel vehicle, a gas vehicle, or a new energy vehicle. The new energy vehicle may be a pure electric vehicle, a hybrid vehicle, an extended-range vehicle, or the like.

The battery involved in the embodiments of the present application may be a single physical module including one or more battery cells to provide a higher voltage and capacity. When there are a plurality of battery cells, the plurality of battery cells are connected in series, in parallel, or in series-parallel by a busbar component. The series-parallel connection means that both series connection and parallel connection are present for the connection among the plurality of battery cells.

In some embodiments, the battery may be a battery module. When there are a plurality of battery cells, the plurality of battery cells are arranged and fixed to form a battery module. As an example, the plurality of battery cells may be fixed by a banding strap or the like to form a battery module. As an example, the plurality of battery cells may also be fixed by an end plate, a side plate, or the like to form a battery module.

In some embodiments, the battery may be a battery pack, which may include a case and battery cells. As an example, the battery cells may be accommodated directly in the case. As an example, the battery cells may also be formed into a battery module before being accommodated in the case.

For ease of description, in the embodiments of the present application, the description is provided by taking a vehicle as an example of the electric device.

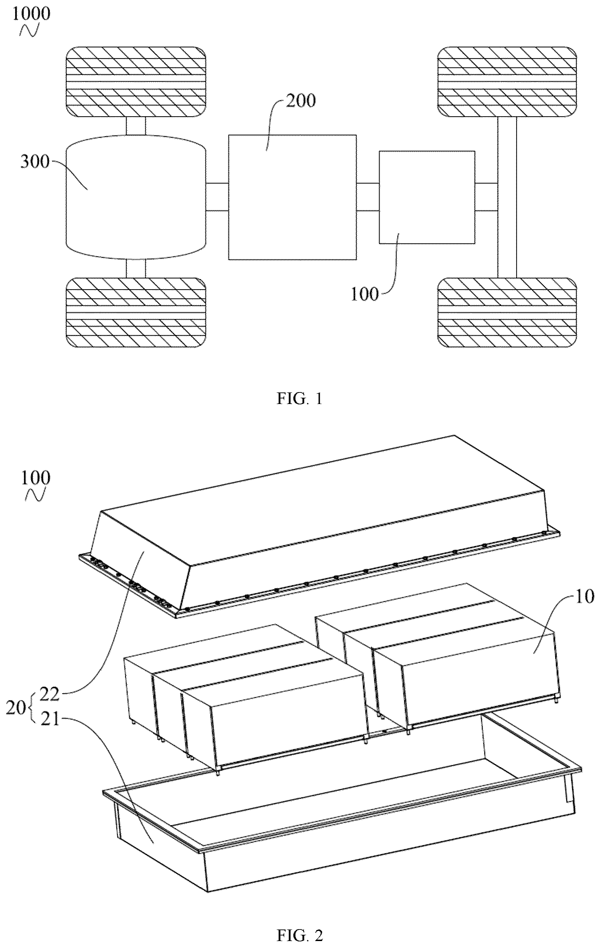

Referring to FIG. 1, FIG. 1 is a schematic diagram of a vehicle 1000 according to some embodiments of the present application. A battery 100 described above is provided inside the vehicle 1000, and the battery 100 may be disposed at the bottom, the head, or the tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is configured to control the battery 100 to power the motor 300, e.g., for operation power needed by the vehicle 1000 for start-up, navigation, and driving.

In some embodiments, the battery 100 may not only serve as an operation power source for the vehicle 1000, but also as a driving power source for the vehicle 1000 to, instead of or in part instead of fuel or natural gas, provide driving power for the vehicle.

Referring to FIG. 2, FIG. 2 is an exploded view of a battery 100 according to some embodiments of the present application. The battery 100 includes a case 20 and a plurality of battery cells 10. The case 20 is a structure having an accommodating space therein, and the case 20 may be of various structures. In some embodiments, the case 20 may include a first portion 21 and a second portion 22. The first portion 21 and the second portion 22 are mutually lidded with each other, and jointly define the above accommodating space. The first portion 21 may be a hollow structure with one end open, and the second portion 22 is a plate-like structure. The second portion 22 lids the open side of the first portion 21, such that the first portion 21 and the second portion 22 jointly define the above accommodating space. Or, the first portion 21 and the second portion 22 may also each be a hollow structure with one end open, as shown in FIG. 2, and the open side of the first portion 21 lids the open side of the second portion 22, such that the first portion 21 and the second portion 22 jointly define the above accommodating space. The case 20 formed by the first portion 21 and the second portion 22 may be in various shapes, such as cylindrical and rectangular parallelepiped.

In some embodiments, the plurality of battery cells 10 may be connected in series, in parallel, or in series-parallel as an integrated unit, and then the integrated unit formed by the plurality of battery cells 10 is directly accommodated in the above accommodating space of the case 20, as shown in FIG. 2. The plurality of battery cells 10 may also be first connected in series, in parallel, or in series-parallel and then arranged and fixed to form a plurality of battery modules, the plurality of battery modules are then connected in series, in parallel, or in series-parallel to form an integrated unit, and then the integrated unit is accommodated in the above accommodating space of the case 20.

In some embodiments, referring to FIG. 1 and FIG. 2, when the battery 100 is applied to the vehicle, the case 20 of the battery 100 may be part of a chassis structure of the vehicle 1000. For example, a part of the case 20 may be at least a part of the chassis of the vehicle 1000, or a part of the case 20 may be at least a part of a transverse beam and a longitudinal beam of the vehicle 1000.

The battery cell 10 refers to the smallest unit that stores and outputs electric energy. The battery cell 10 may be a secondary battery or a primary battery. The battery cell 10 may be, but is not limited to, a metal battery, a lithium sulfur battery, a sodium-ion battery, or a magnesium-ion battery. The battery cell 10 may be cylindrical, flat, rectangular parallelepiped-shaped, or in other shapes.

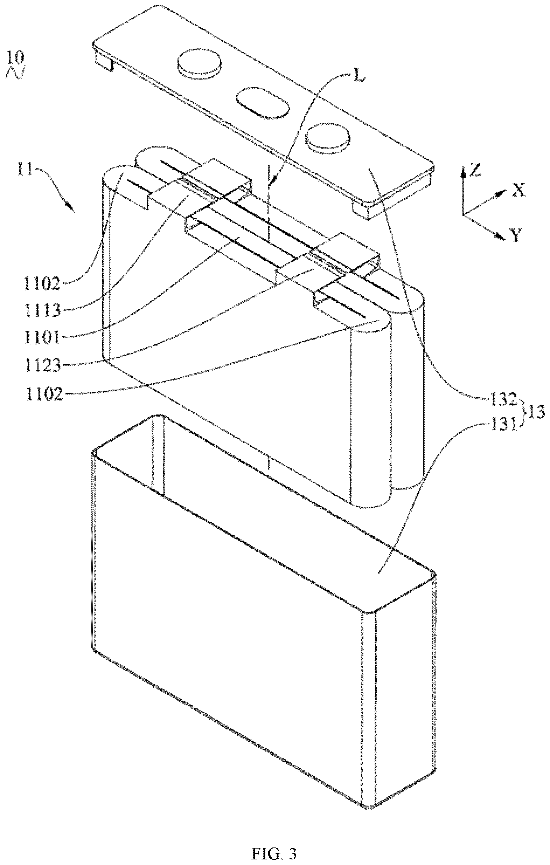

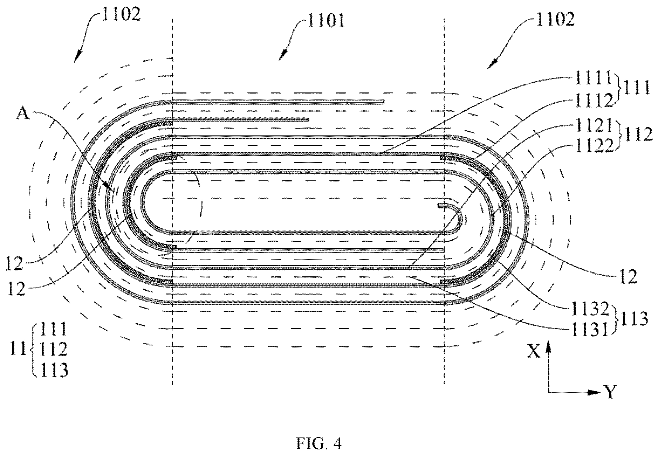

Referring to FIG. 3 and FIG. 4 together, FIG. 3 is a schematic exploded view of a battery cell 10 according to some embodiments of the present application, FIG. 4 is a cross-sectional view of matching of an electrode assembly 11 and an active structure 12 according to some embodiments of the present application, and the cross section shown in FIG. 4 is perpendicular to the Z axis in FIG. 3. The battery cell 10 includes an electrode assembly 11 and a shell 13.

The electrode assembly 11 is a component where the electrochemical reaction occurs in the battery cell 10. The electrode assembly 11 is mainly formed by winding a positive electrode plate 111 and a negative electrode plate 112, and a separator 113 is disposed between the positive electrode plate 111 and the negative electrode plate 112. Part of the positive electrode plate 111 is provided with an active substance, part of the negative electrode plate 112 is provided with an active substance, and the part of the positive electrode plate 111 not being provided with the active substance and the part of the negative electrode plate 112 not being provided with the active substance each form a tab. The tab of the positive electrode plate 111 is a positive electrode tab 1113, the tab of the negative electrode plate 112 is a negative electrode tab 1123, and the positive electrode tab 1113 and the negative electrode tab 1123 may be jointly located at one end of the electrode assembly 11 or at two opposite ends of the electrode assembly 11 respectively.

In the battery cell 10, the number of electrode assemblies 11 may be one or more.

In some embodiments, the battery cell 10 may further include an electrolyte that conducts ions between the positive electrode plate 111 and the negative electrode plate 112. The electrolyte involved in the embodiments of the present application may be liquid, gel, or solid. In the charging process of the battery cell 10, ions are de-intercalated from the active substance of the positive electrode plate 111, and the ions migrate to the negative electrode plate 112 and are intercalated into the active substance of the negative electrode plate 112. In the discharging process of the battery cell 10, ions are de-intercalated from the active substance of the negative electrode plate 112 and migrate to the positive electrode plate 111 to be intercalated into the active substance of the positive electrode plate 111.

The shell 13 includes a housing 131 and an end cover 132. The housing 131 and the end cover 132 are components for jointly defining the internal environment of the battery cell 10. The internal environment defined by the housing 131 and the end cover 132 is used for accommodating the electrode assembly 11 and the electrolyte. The housing 131 and the end cover 132 may be separate components. Specifically, the housing 131 is provided with an opening, and the end cover 132 lids the opening of the housing 131 to define the internal environment of the battery cell 10 together with the housing 131 and to isolate the internal environment of the battery cell 10 from the external environment. The housing 131 and the end cover 132 may also be of an integrated structure. Specifically, a common connection surface may be formed between the end cover 132 and the housing 131 before the electrode assembly 11 is placed into the housing, and after the electrode assembly 11 is placed into the housing, the end cover 132 lids the housing 131 when the electrode assembly 11 needs to be encapsulated.

The number of end covers 132 may be one. The number of end covers 132 may also be two, and the two end covers 132 are respectively disposed at two opposite ends of the housing 131.

The housing 131 may be cylindrical, square, etc., which may be specifically determined depending on the specific shape and size of the electrode assembly 11. Moreover, the housing 131 and the end cover 132 may be made of a variety of materials, such as copper, iron, aluminum, stainless steel, aluminum alloy, and plastic.

Although the electrode assembly 11 involved in the embodiments of the present application is developed based on the problem of lithium plating occurring in the charging and discharging processes of the battery cell 10, the application scenario thereof is not limited thereto. It can be understood that the electrode assembly 11 involved in the embodiments of the present application may be applied to a lithium-ion battery to alleviate the problem of lithium plating; may also be applied to a sodium-ion battery to alleviate the problem of sodium ion precipitation; or may also be applied to other types of battery cells 10 to alleviate the problem of ion precipitation of other types. That is, the electrode assembly 11 involved in the embodiments of the present application may be used for various types of battery cells 10 to alleviate the problem of ion precipitation in the charging and discharging processes of the battery cells 10.

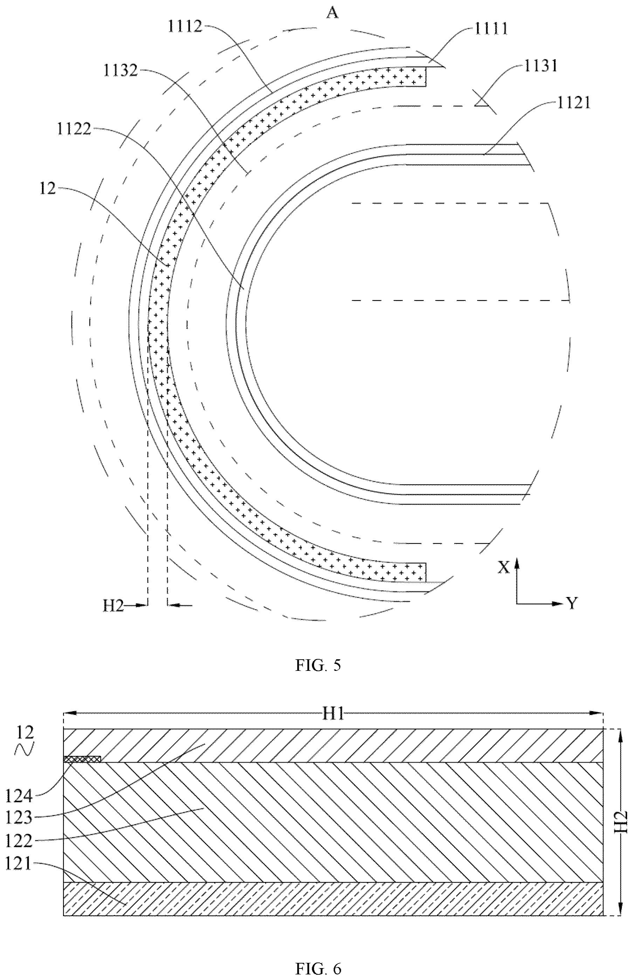

Referring to FIG. 3 to FIG. 5 together, FIG. 4 is a cross-sectional view of matching of an electrode assembly 11 and an active structure 12 according to some embodiments of the present application, the cross section shown in FIG. 4 is perpendicular to the Z axis (that is, a first direction Z), and FIG. 5 is an enlarged view of part A in FIG. 4. The battery cell 10 according to the embodiments of the present application includes the electrode assembly 11 and the active structure 12. The electrode assembly 11 includes the positive electrode plate 111 and the negative electrode plate 112, and the positive electrode plate 111 and the negative electrode plate 112 are stacked and wound. The electrode assembly 11 includes a straight portion 1101 and two corner portions 1102, and the two corner portions 1102 are disposed on two opposite sides of the straight portion 1101 respectively. The positive electrode plate 111 includes first straight segments 1111 and first bent segments 1112, and the first bent segments 1112 are connected to the first straight segments 1111. The negative electrode plate 112 includes second straight segments 1121 and second bent segments 1122, and the second bent segments 1122 are connected to the second straight segments 1121. The first straight segments 1111 and the second straight segments 1121 are alternately stacked to form the above straight portion 1101 of the electrode assembly 11, and the first bent segments 1112 and the second bent segments 1122 are alternately stacked to form the above corner portions 1102 of the electrode assembly 11. At least part of the active structure 12 is disposed between the first bent segments 1112 and the second bent segments 1122 adjacent thereto along an inner side, and configured to intercalate ions.

It can be understood that the positive electrode plate 111 and the negative electrode plate 112 are stacked, and the whole formed by stacking the positive electrode plate 111 and the negative electrode plate 112 is wound to form the electrode assembly 11.

As shown in FIG. 3 and FIG. 4, the whole formed by stacking the positive electrode plate 111 and the negative electrode plate 112 is wound around a first axis L to form the electrode assembly 11. The first axis L passes through the center position of the electrode assembly 11 and is parallel to a first direction Z.

As shown in FIG. 3 and FIG. 4, the electrode assembly 11 can be divided into a straight portion 1101 and two corner portions 1102, and the two corner portions 1102 are disposed on two opposite sides of the straight portion 1101 respectively. In FIG. 4, the electrode assembly 11 is divided into the straight portion 1101 and the corner portions 1102 by dotted lines.

After the positive electrode plate 111 and the negative electrode plate 112 are stacked and wound to form the electrode assembly 11, as shown in FIG. 4, a part of the positive electrode plate 111 is in a straight distribution state and is the first straight segments 1111; and the other part of the positive electrode plate 111 is in a bent distribution state and is the first bent segments 1112. A part of the negative electrode plate 112 is in a straight distribution state and is the second straight segments 1121; and the other part of the negative electrode plate 112 is in a bent distribution state and is the second bent segments 1122.

As shown in FIG. 4 and FIG. 5, the positive electrode plate 111 includes a plurality of first straight segments 1111 and a plurality of first bent segments 1112. Along the winding direction of the positive electrode plate 111, the first straight segments 1111 and the first bent segments 1112 are alternately distributed and connected, such that the plurality of first straight segments 1111 and the plurality of first bent segments 1112 are connected to form the positive electrode plate 111. Correspondingly, the negative electrode plate 112 includes a plurality of second straight segments 1121 and a plurality of second bent segments 1122. Along the winding direction of the negative electrode plate 112, the second straight segments 1121 and the second bent segments 1122 are alternately distributed and connected, such that the plurality of second straight segments 1121 and the plurality of second bent segments 1122 are connected to form the negative electrode plate 112.

The winding direction of the positive electrode plate 111 refers to a direction in which the positive electrode plate 111 is wound and extends from the head end to the tail end of the positive electrode plate 111, and the head end of the positive electrode plate 111 is more proximal to the center position of the electrode assembly 11 than the tail end. The winding direction of the negative electrode plate 112 refers to a direction in which the negative electrode plate 112 is wound and extends from the head end to the tail end of the negative electrode plate 112, and the head end of the negative electrode plate 112 is more proximal to the center position of the electrode assembly 11 than the tail end.

As shown in FIG. 3 to FIG. 5, the plurality of first straight segments 1111 and the plurality of second straight segments 1121 form the straight portion 1101 of the electrode assembly 11. Specifically, the first straight segments 1111 and the second straight segments 1121 are alternately stacked along a second direction X. It can be understood that the straight portion 1101 of the electrode assembly 11 is in a straight extended state. Specifically, the positive electrode plate 111 located at the straight portion 1101 is the first straight segments 1111, and the negative electrode plate 112 located at the straight portion 1101 is the second straight segments 1121, that is, the positive electrode plate 111 and the negative electrode plate 112 located at the straight portion 1101 are both distributed in a straight state.

The plurality of first bent segments 1112 and the plurality of second bent segments 1122 form two corner portions 1102 of the electrode assembly 11, and the two corner portions 1102 are disposed on two opposite sides of the straight portion 1101 along a third direction Y respectively. In each corner portion 1102, the first bent segments 1112 and the second bent segments 1122 are alternately stacked. It can be understood that each corner portion 1102 is in a bent extended state. Specifically, the positive electrode plate 111 located at the corner portions 1102 is the first bent segments 1112, and the negative electrode plate 112 located at the corner portions 1102 is the second bent segments 1122, that is, the positive electrode plate 111 and the negative electrode plate 112 located at the corner portions 1102 are both distributed in a bent state.

The first direction Z is perpendicular to the second direction X, the first direction Z is perpendicular to the third direction Y, and the second direction X is perpendicular to the third direction Y. As shown in FIG. 3 to FIG. 5, the first direction Z is parallel to the Z axis, the second direction X is parallel to the X axis, and the third direction Y is parallel to the Y axis. The X axis, the Y axis, and the Z axis form a spatial coordinate system in FIG. 3, that is, the X axis, the Y axis, and the Z axis are three pairwise perpendicular coordinate axes in the spatial coordinate system respectively. The X axis and the Y axis form a planar coordinate system in FIG. 4 and 5.

It can be understood that the positive electrode plate 111 includes the first straight segments 1111, the first bent segments 1112, and a positive electrode tab 1113. The first straight segments 1111 and the first bent segments 1112 are portions of the positive electrode plate 111 being provided with an active substance, and portions of the positive electrode plate 111 not being provided with the active substance form the positive electrode tab 1113. The positive electrode tab 1113 may be conductively connected to the first straight segments 1111 and may also be conductively connected to the first bent segments 1112.

Accordingly, the negative electrode plate 112 includes the second straight segments 1121, the second bent segments 1122, and a negative electrode tab 1123. The second straight segments 1121 and the second bent segments 1122 are portions of the negative electrode plate 112 being provided with an active substance, and portions of the negative electrode plate 112 not being provided with the active substance form the negative electrode tab 1123. The negative electrode tab 1123 may be conductively connected to the second straight segments 1121 and may also be conductively connected to the second bent segments 1122.

The active structure 12 refers to a component that is provided with an active substance and capable of being configured to intercalate ions. The active structure 12 is disposed at the corner portions 1102 of the electrode assembly 11 to intercalate ions at the corner portions 1102, thereby alleviating the problem of ion precipitation at the corner portions 1102.

At least part of the active structure 12 is disposed between the first bent segments 1112 and the second bent segments 1122 adjacent thereto along the inner side, which means that at least part of the active structure 12 is disposed between the first bent segments 1112 and the second bent segments 1122 located on the inner side of the first bent segments 1112 and adjacent to the first bent segments 1112. It should be noted that in the corner portions 1102, the first bent segments 1112 and the second bent segments 1122 are alternately disposed. In this way, in the first bent segments 1112 and the second bent segments 1122 that are adjacent along the third direction Y, a case where the first bent segments 1112 are located on the outer side of the second bent segments 1122 may exist, that is, the second bent segments 1122 are located on the inner side the first bent segments 1112, and the active structure 12 is disposed between the inner side of the first bent segments 1112 and the outer side of the second bent segments 1122.

The second bent segments 1122 adjacent along the inner side refers to the second bent segments 1122 that are located on the inner side of the first bent segments 1112 along the third direction Y and adjacent to the first bent segments 1112. The inner side of the first bent segments 1112 refers to a side of the first bent segments 1112 facing the center position of the electrode assembly 11 along the third direction Y. The outer side of the second bent segments 1122 refers to a side of the second bent segments 1122 away from the center position of the electrode assembly 11 along the third direction Y.

It should be noted that the active structure 12 is disposed between the first bent segments 1112 and the second bent segments 1122 adjacent thereto along the inner side, such that the active structure 12 can intercalate ions de-intercalated from the first bent segments 1112.

According to the electrode assembly 11 provided by the embodiments of the present application, the active structure 12 configured to intercalate ions is disposed between the first bent segments 1112 and the second bent segments 1122 adjacent thereto along the inner side, such that in the charging process of the battery cell of the battery 100, ions de-intercalated from the first bent segments 1112 can be intercalated into the active structure 12 in addition to the second bent segments 1122, and thus the problem of ion precipitation caused by the ions excessively reaching the second bent segments 1122 can be alleviated. Thus, the problem of ion precipitation at the corner portions 1102 of the electrode assembly 11 can be alleviated, and thus the charging and discharging cycle performance and the reliability of the battery 100 can be improved.

On the basis of the above structure, in the charging process of the battery 100, ions are de-intercalated from the positive electrode plate 111, migrate to the negative electrode plate 112, and are intercalated into the negative electrode plate 112. Specifically, ions de-intercalated from the first straight segments 1111 may be intercalated into the second straight segments 1121, and ions de-intercalated from the first bent segments 1112 may be partially intercalated into the active structure 12, and partially intercalated into the second bent segments 1122.

In addition, by providing the active structure 12 at the corner portions 1102, the active structure 12 is filled between the first bent segments 1112 and the second bent segments 1122, such that the bending curvature of the corner portions 1102 can be optimized, which is conducive to improving the ion transport kinetics of the corner portions 1102 and at the same time alleviating the problem that the first bent segments 1112 of the corner portions 1102 are easily collapsed, thereby being conducive to making the battery 100 have good quality.

In some cases, the first straight segments 1111 and the first bent segments 1112 of the positive electrode plate 111 may be coated with active substances with different material ratios, such that ions de-intercalated from the first bent segments 1112 can match with an accommodating space of the second bent segments 1122 of the negative electrode plate 112, thereby alleviating the problem of ion precipitation at the corner portions 1102. However, in the process of manufacturing the positive electrode plate 111, the positive electrode plate 111 needs to be coated with the active substances with different material ratios in an intermittent coating manner so as to manufacture the special positive electrode plate 111, resulting in an increase in the process difficulty. However, in the electrode assembly 11 according to the embodiments of the present application, the active structure 12 is disposed between the first bent segments 1112 and the second bent segments 1122 adjacent thereto along the inner side, such that the problem of ion precipitation at the corner portions 1102 can be alleviated, the process difficulty can be reduced, and the production is easy.

In some embodiments, refer to FIG. 4 and other accompanying drawings. The positive electrode plate 111 includes three or more first bent segments 1112, and the three or more first bent segments 1112 are sequentially spaced apart from each other along the winding direction of the positive electrode plate 111. Along the winding direction of the positive electrode plate 111, the active structure 12 is disposed at least between the first of the first bent segments 1112 to the third of the first bent segments 1112 and the second bent segments 1122 adjacent thereto along the inner side.

Three or more includes three. That is, the positive electrode plate 111 includes three or more first bent segments 1112, which may include three first bent segments 1112, or may include more than three first bent segments 1112, such as four, five, and six first bent segments.

It can be understood that, along the winding direction of the positive electrode plate 111, the active structure 12 is disposed between the first of the first bent segments 1112 and the second bent segments 1122 adjacent thereto along the inner side, the active structure 12 is also disposed between the second of the first bent segments 1112 and the second bent segments 1122 adjacent thereto along the inner side, and the active structure 12 is also disposed between the third of the first bent segments 1112 and the second bent segments 1122 adjacent thereto along the inner side. Based on this, the active structure 12 on the inner side of the first of the first bent segments 1112 can alleviate the problem of ion precipitation at the first of the first bent segments 1112, the active structure 12 on the inner side of the second of the first bent segments 1112 may alleviate the problem of ion precipitation at the second of the first bent segments 1112, and the active structure 12 on the inner side of the third of the first bent segments 1112 may alleviate the problem of ion precipitation at the third of the first bent segments 1112. That is, along the winding direction of the positive electrode plate 111, the active structure 12 is disposed at the first to third folds of the positive electrode plate 111, such that the problem of ion precipitation at the first to third folds of the positive electrode plate 111 can be alleviated. The first of the first bent segments 1112 refers to the first bent segment 1112 of the positive electrode plate 111 most proximal to the center position of the electrode assembly 11.

It should be noted that in the charging process of the battery 100, ions at the first to fifth folds of the positive electrode plate 111 tend to excessively reach the negative electrode plate 112, resulting in the phenomenon of ion precipitation. In particular, ions are more likely to be precipitated at the first to third folds of the positive electrode plate 111.

The above active structure 12 is disposed at the first to third folds of the positive electrode plate 111, such that the problem of ion precipitation at the portion of the electrode assembly 11 where ion precipitation is serious can be alleviated, thereby enabling overall alleviation of the problem of ion precipitation of the battery 100, and thus improving the charging and discharging cycle performance and the reliability of the battery 100.

In some embodiments, the active structure 12 may be disposed at the fourth fold and the fifth fold of the positive electrode plate 111, which may further alleviate the problem of ion precipitation at the corner portions 1102 of the electrode assembly 11.

In some embodiments, refer to FIG. 4, FIG. 5, and other drawings. The electrode assembly 11 further includes a separator 113, and the separator 113 is stacked between the positive electrode plate 111 and the negative electrode plate 112.

The separator 113 is stacked between the positive electrode plate 111 and the negative electrode plate 112 to insulate the positive electrode plate 111 from the negative electrode plate 112, thereby preventing an internal short circuit of the electrode assembly 11 as much as possible.

As shown in FIG. 4 and FIG. 5, the separator 113 is stacked between the positive electrode plate 111 and the negative electrode plate 112, and wound with the positive electrode plate 111 and the negative electrode plate 112 to form the electrode assembly 11. A portion of the separator 113 is disposed in a straight state and stacked between the first straight segments 1111 of the positive electrode plate 111 and the second straight segments 1121 of the negative electrode plate 112, so as to form the straight portion 1101 of the electrode assembly 11 together with the first straight segments 1111 and the second straight segments 1121. Another portion of the separator 113 is disposed in a bent state and stacked between the first bent segments 1112 of the positive electrode plate 111 and the second bent segments 1122 of the negative electrode plate 112, so as to form the corner portions 1102 of the electrode assembly 11 together with the first bent segments 1112 and the second bent segments 1122.

As shown in FIG. 4 and FIG. 5, the separator 113 includes a plurality of third straight segments 1131 and a plurality of third bent segments. Along the winding direction of the separator 113, the third straight segments 1131 and the third bent segments 1132 are alternately distributed and connected, such that the plurality of third straight segments 1131 and the plurality of third bent segments 1132 are connected to form the separator 113. The winding direction of the separator 113 refers to a direction in which the separator 113 is wound and extends from the head end to the tail end of the separator 113, and the head end of the separator 113 is more proximal to the center position of the electrode assembly 11 than the tail end.

As shown in FIG. 4 and FIG. 5, the separator 113 located at the straight portion 1101 is the third straight segments 1131, and the third straight segments 1131 are disposed between the first straight segments 1111 and the second straight segments 1121 along the second direction X to form the straight portion 1101 with the first straight segments 1111 and the second straight segments 1121, such that the straight portion 1101 of the electrode assembly 11 is in a straight extended state. The separator 113 located at the corner portions 1102 is the third bent segments 1132, and the third bent segments 1132 are disposed between the first bent segments 1112 and the second bent segments 1122 to form the corner portions 1102 with the first bent segments 1112 and the second bent segments 1122, such that the corner portions 1102 of the electrode assembly 11 are in a bent extended state.

The third straight segments 1131 are located between the first straight segments 1111 and the second straight segments 1121, so as to achieve insulation between the first straight segments 1111 and the second straight segments 1121. The third bent segments 1132 are located between the first bent segments 1112 and the second bent segments 1122, so as to achieve insulation between the first bent segments 1112 and the second bent segments 1122. In this way, the separator 113 achieves insulation between the positive electrode plate 111 and the negative electrode plate 112.

In some embodiments, refer to FIG. 4, FIG. 5, and other drawings. An active structure 12 is disposed between the first bent segments 1112 and the separator 113 adjacent thereto along the inner side. Or, the active structure 12 is disposed between the second bent segments 1122 and the separator 113 adjacent thereto along an outer side. Or, the active structure 12 is disposed between the first bent segments 1112 and the separator 113 adjacent thereto along the inner side, and the active structure 12 is disposed between the second bent segments 1122 and the separator 113 adjacent thereto along the outer side.

It can be understood that at least part of the active structure 12 is disposed between the first bent segments 1112 and the second bent segments 1122 adjacent thereto along the inner side, that is, at least part of the active structure 12 is disposed between the inner side of the first bent segments 1112 and the second bent segments 1122 located on the inner side of the first bent segments 1112 and adjacent to the first bent segments 1112. Specifically, at least part of the active structure 12 is disposed between the first bent segments 1112 and the separator 113 adjacent thereto along the inner side, that is, the active structure 12 is disposed between the inner side of the first bent segments 1112 and the separator 113 located on the inner side of the first bent segments 1112 and adjacent to the first bent segments 1112. Or, at least part of the active structure 12 is disposed between the second bent segments 1122 and the separator 113 adjacent thereto along the outer side, that is, at least part of the active structure 12 is disposed between the outer side of the second bent segments and the separator 113 located on the outer side of the second bent segments 1122 and adjacent to the second bent segments 1122.

Based on this, when only one active structure 12 is provided, at least part of the active structure 12 may be disposed between the first bent segments 1112 and the separator 113 adjacent thereto along the inner side, or may be disposed between the second bent segments 1122 and the separator 113 adjacent thereto along the outer side. When a plurality of active structures 12 are provided, the plurality of active structures 12 may be all disposed between the first bent segments 1112 and the separator 113 adjacent thereto along the inner side; the plurality of active structures may all be disposed between the second bent segments 1122 and the separator 113 adjacent thereto along the outer side; or at least one active structure 12 is disposed between the first bent segments 1112 and the separator 113 adjacent thereto along the inner side, and at least one active structure 12 is disposed between the second bent segments 1122 and the separator 113 adjacent thereto along the outer side.

At least part of the active structure 12 is disposed between the first bent segments 1112 and the separator 113 adjacent thereto along the inner side, or at least part of the active structure 12 is disposed between the second bent segments 1122 and the separator 113 adjacent thereto along the outer side, which both enable the active structure 12 to be located on the inner side of first bent segments 1112, and thus the ions de-intercalated from first bent segments 1112 can be intercalated into the active structure 12 on the inner side, thereby enabling the alleviation of the problem of ion precipitation at the corner portions 1102. In this way, the arrangement of the active structure 12 at the corner portions 1102 is made very flexible.

In some embodiments, refer to FIG. 5, FIG. 6, and other drawings. FIG. 6 is an expanded cross-sectional schematic view of an active structure 12 of a battery cell 10 according to some embodiments of the present application, and the cross section shown in FIG. 6 is perpendicular to the Z axis (i.e., the first direction Z). That is, FIG. 6 is a schematic diagram of the active structure 12 of the structure shown in FIG. 4 in an expanded state. It should be noted that the first bent segments 1112 and the second bent segments 1122 are provided, such that when at least part of the active structure 12 is disposed between the first bent segments 1112 and the second bent segments 1122 adjacent thereto along the inner side, the active structure 12 is also in a bent state. The active structures 12 shown in FIG. 6 to FIG. 9 are all in a straight state, i.e., in an expanded state. The active structure 12 includes a substrate 121 and an active layer 122. The active layer 122 is disposed on the substrate 121 and configured to intercalate ions. At least part of the substrate 121 and at least part of the active layer 122 are disposed between the first bent segments 1112 and the second bent segments 1122 adjacent thereto along the inner side.

The substrate 121 refers to a base portion of the active structure 12 and is configured to receive the active layer 122, such that the active layer 122 can be formed on the substrate 121.

The active layer 122 refers to a portion of the active structure 12 being provided with an active substance, and the active layer 122 may be configured to intercalate ions.

The substrate 121 and the active layer 122 are both disposed between the inner side of the first bent segments 1112 and the second bent segments 1122 located on the inner side of the first bent segments 1112 and adjacent to the first bent segments 1112. When the active structure 12 is disposed between the first bent segments 1112 and the separator 113 adjacent thereto along the inner side, the substrate 121 and the active layer 122 are both disposed between the first bent segments 1112 and the separator 113 adjacent thereto along the outer side. When the active structure 12 is disposed between the second bent segments 1122 and the separator 113 adjacent thereto along the outer side, the substrate 121 and the active layer 122 are both disposed between the second bent segments 1122 and the separator 113 adjacent thereto along the outer side.

On the basis of the above structure, in the charging process of the battery 100, ions de-intercalated from the first bent segments 1112 can be intercalated into the second bent segments 1122 and also the active layer 122 of the active structure 12, such that the problem of ion precipitation caused by the ions excessively reaching the second bent segments 1122 can be alleviated.

By arranging the active structure 12 to include the substrate 121 and the active layer 122 disposed on the substrate 121, ions can be intercalated into the active structure 12 through the active layer 122, thereby enabling the alleviation of the problem of ion precipitation at the corner portions 1102.

In some embodiments, the substrate 121 may be made of a material with certain heat resistance, such that the active structure 12 can maintain normal use after the electrode assembly 11 generates heat, thereby facilitating normal intercalation of the ions into the active structure 12 and thus alleviating the problem of ion precipitation.

For example, the substrate 121 may be, but is not limited to, a biaxially oriented polypropylene film, polyethylene, polypropylene, polyimide, polyethylene terephthalate, or the like.

In some embodiments, as shown in FIG. 5 and FIG. 6, the active layer 122 and the substrate 121 are sequentially disposed along a thickness direction of the substrate 121. Moreover, when the active structure 12 is disposed at the corner portions 1102, the active layer 122 may be disposed in parallel with the first bent segments 1112, such that the ions can be efficiently intercalated into the active layer 122, thereby alleviating the problem of ion precipitation.

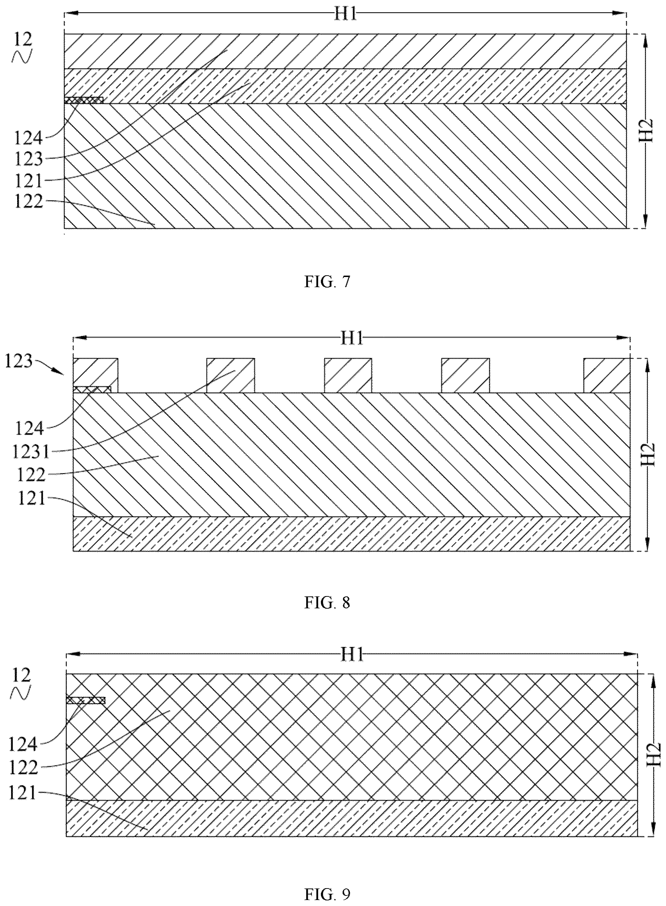

In some embodiments, refer to FIG. 5 to FIG. 7 and other drawings. FIG. 7 is an expanded cross-sectional view of an active structure 12 of a battery cell 10 according to some other embodiments of the present application. The cross section shown in FIG. 7 is perpendicular to the Z axis (i.e., the first direction Z). That is, FIG. 7 is a schematic diagram of the active structure 12 of the structure shown in FIG. 4 in an expanded state. The active structure 12 further includes an adhesive layer 123. In some possible designs, as shown in FIG. 6, the active layer 122 is provided with an adhesive layer 123; or, in some possible designs, as shown in FIG. 7, the substrate 121 is provided with an adhesive layer 123; or, in some possible designs, both the substrate 121 and the active layer 122 are provided with an adhesive layer 123.

The electrode assembly 11 further includes a separator 113, and the separator 113 is stacked between the positive electrode plate 111 and the negative electrode plate 112.

At least part of the active structure 12 may be disposed between the first bent segments 1112 and the separator 113 adjacent thereto along the inner side, or, at least part of the active structure 12 may be disposed between the second bent segments 1122 and the separator 113 adjacent thereto along the outer side.

When at least part of the active structure 12 is disposed between the first bent segments 1112 and the separator 113 adjacent thereto along the inner side, one side of the active structure 12 is provided with the adhesive layer 123 and bonded to the first bent segments 1112 by the adhesive layer 123; or, the other side of the active structure 12 is provided with the adhesive layer 123 and bonded to the separator 113 by the adhesive layer 123; or, two opposite sides of the active structure 12 are provided with adhesive layers 123 and bonded to the first bent segments 1112 and the separator 113 by the adhesive layers 123 on the two opposite sides respectively.

When at least part of the active structure 12 is disposed between the second bent segments 1122 and the separator 113 adjacent thereto along the outer side, one side of the active structure 12 is provided with the adhesive layer 123 and bonded to the second bent segments 1122 by the adhesive layer 123; or, the other side of the active structure 12 is provided with the adhesive layer 123 and bonded to the separator 113 by the adhesive layer 123; or, two opposite sides of the active structure 12 are provided with adhesive layers 123 and bonded to the second bent segments 1122 and the separator 113 by the adhesive layers 123 on the two opposite sides respectively.

The adhesive layer 123 is a component with an adhesive property on the active structure 12. For example, the adhesive layer may be double-sided adhesive tape, structural adhesive, or the like.

When the active layer 122 is provided with the adhesive layer 123, as shown in FIG. 6, the adhesive layer 123 is disposed on a side of the active layer 122 distal to the substrate 121. When the substrate 121 is provided with the adhesive layer 123, as shown in FIG. 7, the adhesive layer 123 is disposed on a side of the substrate 121 distal to the active layer 122.

It should be noted that when at least part of the active structure 12 is disposed between the first bent segments 1112 and the separator 113 adjacent thereto along the inner side, in some possible designs, the active structure 12 is bonded to the first bent segments 1112 by the adhesive layer 123, specifically, the adhesive layer 123 is bonded to the inner side of the first bent segments 1112. Based on this, when the active layer 122 is disposed on a side of the substrate 121 facing the first bent segments 1112, the adhesive layer 123 is disposed on the side of the active layer 122 distal to the substrate 121. When the active layer 122 is disposed on the side of the substrate 121 distal to the first bent segments 1112, the adhesive layer 123 is disposed on the side of the substrate 121 distal to the active layer 122. In some other possible designs, the active structure 12 is bonded to separator 113 by the adhesive layer 123, specifically, the adhesive layer 123 is bonded to the outer side of the separator 113. Based on this, when the active layer 122 is disposed on a side of the substrate 121 facing the first bent segments 1112, the adhesive layer 123 is disposed on the side of the substrate 121 distal to the active layer 122. When the active layer 122 is disposed on the side of the substrate 121 distal to the first bent segments 1112, the adhesive layer 123 is disposed on the side of the active layer 122 distal to the substrate 121. In yet some other possible designs, the active structure 12 is bonded to the first bent segments 1112 and the separator 113 by the adhesive layer 123, specifically, the adhesive layers 123 are disposed on both the side of the substrate 121 distal to the active layer 122 and the side of the active layer 122 distal to the substrate 121, that is, two adhesive layers 123 are provided. One of the adhesive layers 123 is bonded to the inner side of the first bent segments 1112, and the other adhesive layer 123 is bonded to the outer side of the separator 113.

When at least part of the active structure 12 is disposed between the second bent segments 1122 and the separator 113 adjacent thereto along the outer side, in some possible designs, the active structure 12 is bonded to the second bent segments 1122 by the adhesive layer 123, specifically, the adhesive layer 123 is bonded to the outer side of the second bent segments 1122. Based on this, when the active layer 122 is disposed on a side of the substrate 121 facing the second bent segments 1122, the adhesive layer 123 is disposed on the side of the active layer 122 distal to the substrate 121. When the active layer 122 is disposed on the side of the substrate 121 distal to the second bent segments 1122, the adhesive layer 123 is disposed on the side of the substrate 121 distal to the active layer 122. In some other possible designs, the active structure 12 is bonded to separator 113 by the adhesive layer 123, specifically, the adhesive layer 123 is bonded to the inner side of the separator 113. Based on this, when the active layer 122 is disposed on a side of the substrate 121 facing the second bent segments 1122, the adhesive layer 123 is disposed on the side of the substrate 121 distal to the active layer 122. When the active layer 122 is disposed on the side of the substrate 121 distal to the second bent segments 1122, the adhesive layer 123 is disposed on the side of the active layer 122 distal to the substrate 121. In yet some other possible designs, the active structure 12 is bonded to the second bent segments 1122 and the separator 113 by the adhesive layer 123, specifically, the adhesive layers 123 are disposed on both the side of the substrate 121 distal to the active layer 122 and the side of the active layer 122 distal to the substrate 121, that is, two adhesive layers 123 are provided. One of the adhesive layers 123 is bonded to the outer side of the second bent segments 1122, and the other adhesive layer 123 is bonded to the inner side of the separator 113.

By providing the adhesive layer 123, the active structure 12 can be stably fixed to the corner portions 1102, and the problem that the active structure 12 falls off can be alleviated, thereby better alleviating the problem of ion precipitation at the corner portions 1102. Moreover, the active structure 12 is bonded to the corner portions 1102 by the adhesive layer 123, such that the fixing process of the active structure 12 on the corner portions 1102 is very simple and easy to achieve.

In some embodiments, refer to FIG. 5, FIG. 6, FIG. 8, and other drawings. FIG. 8 is an expanded cross-sectional view of an active structure 12 of an electrode assembly 11 according to yet some other embodiments of the present application. The cross section shown in FIG. 8 is perpendicular to the Z axis (i.e., the first direction Z). That is, FIG. 8 is a schematic diagram of the active structure 12 of the structure shown in FIG. 4 in an expanded state. A single adhesive layer 123 includes a plurality of adhesive portions 1231 spaced apart from each other on the active layer 122 or the substrate 121. The adhesive portions 1231 of the single adhesive layer 123 are configure to bond the first bent segments 1112, the separator 113, or the second bent segments 1122.

The adhesive portions 1231 are a part of the adhesive layer 123, and each adhesive portion 1231 is configured to function as an adhesive.

It can be understood that the single adhesive layer 123 may be bonded to the first bent segments 1112, the separator 113, or the second bent segments 1122.

As shown in FIG. 8, when the adhesive layer 123 is disposed on the active layer 122, the plurality of adhesive portions 1231 of the adhesive layer 123 are spaced apart from each other on the active layer 122. When the adhesive layer 123 is disposed on the substrate 121, the plurality of adhesive portions 1231 of the adhesive layer 123 are spaced apart from each other on the substrate 121.

When the adhesive layer 123 is bonded to the first bent segments 1112, the adhesive portions 1231 are bonded to the first bent segments 1112. When the adhesive layer 123 is bonded to the separator 113, the adhesive portions 1231 are bonded to the separator 113. When the adhesive layer 123 is bonded to the second bent segments 1122, the adhesive portions 1231 are bonded to the second bent segments 1122.

By dividing the adhesive layer 123 into the plurality of adhesive portions 1231, the amount of the adhesive layer 123 can be reduced, which is thus conducive to improving the energy density of the battery 100.

In some embodiments, the adhesive portions 1231 are disposed on a side of the active structure 12 proximal to the first bent segments 1112.

It can be understood that when the active layer 122 is disposed on a side of the substrate 121 facing the first bent segments 1112, the adhesive portions 1231 are disposed on a side of the active layer 122 distal to the substrate 121. When the active layer 122 is disposed on a side of the substrate 121 distal to the first bent segments 1112, the adhesive portions 1231 are disposed on a side of the substrate 121 distal to the active layer 122. Based on this, the adhesive portions 1231 may be disposed on the side of the active structure 12 proximal to the first bent segments 1112. When at least part of the active structure 12 is disposed between the first bent segments 1112 and the separator 113 adjacent thereto along the inner side, the active structure 12 is bonded to the inner side of the first bent segments 1112 by the adhesive portions 1231. When the active structure 12 is disposed between the second bent segments 1122 and the separator 113 adjacent thereto along the outer side, the active structure 12 is bonded to the inner side of the separator 113 by the adhesive portions 1231.

By arranging the plurality of adhesive portions 1231 to be spaced apart from each other, when the active structure 12 is disposed between the first bent segments 1112 and the separator 113 adjacent thereto along the inner side, the inner side of the first bent segments 1112 may directly in contact with the substrate 121 or the active layer 122 by the adhesive portions 1231 and gaps between the adhesive portions 1231, such that the contact area between the inner side of the first bent segments 1112 and the substrate 121 or the contact area between the inner side of the first bent segments 1112 and the active layer 122 can be increased on the basis that the active structure 12 and the first bent segments 1112 can maintain a good adhesive effect. When the active structure 12 is disposed between the second bent segments 1122 and the separator 113 adjacent thereto along the outer side, the inner side of the separator 113 may directly in contact with the substrate 121 or the active layer 122 by the adhesive portions 1231 and the gaps between the adhesive portions 1231, such that the contact area between the inner side of the separator 113 and the substrate 121 or the contact area between the inner side of the separator 113 and the active layer 122 can be increased on the basis that the active structure 12 and the separator 113 can maintain a good adhesive effect. By such arrangement, the ions de-intercalated from the first bent segments 1112 can be intercalated into the active structure 12 more quickly, such that the problem that the ions de-intercalated from the first bent segments 1112 excessively reach the second bent segments 1122 can be better alleviated, and thus the problem of ion precipitation at the corner portions 1102 can be alleviated.

In some embodiments, refer to FIG. 5, FIG. 6, and other drawings. The adhesive layer 123 is disposed on the active layer 122 and bonded to the first bent segments 1112.

As shown in FIG. 6, and in conjunction with FIG. 5, the active structure 12 is disposed between the first bent segments 1112 and the separator 113 adjacent thereto along the inner side. Moreover, the active layer 122 is disposed on a side of the substrate 121 facing the first bent segments 1112, the adhesive layer 123 is disposed on a side of the active layer 122 distal to the substrate 121, and the adhesive layer 123 is bonded to the inner side of the first bent segments 1112.

By such arrangement, the active layer 122 can be proximal to the inner side of the first bent segments 1112 as much as possible, such that the efficiency of intercalating the ions de-intercalated from the first bent segments 1112 into the active layer 122 can be improved, thereby effectively alleviating the problem of ion precipitation at the corner portions 1102. Moreover, the active structure 12 is bonded to the first bent segments 1112, such that the ions de-intercalated from the first bent segments 1112 can be intercalated into the active layer 122 conveniently, thereby effectively alleviating the problem of ion precipitation at the corner portions 1102.

It should be noted that refer to FIG. 5, FIG. 6, and FIG. 8, when the adhesive layer 123 includes a plurality of adhesive portions 1231, the plurality of adhesive portions 1231 are spaced apart from each other on a side of the active layer 122 distal to the substrate 121 and bonded to the inner side of the first bent segments 1112. In this way, the direct contact area between the active layer 122 and the inner side of the first bent segments 1112 can be increased, such that the ions de-intercalated from the first bent segments 1112 can be directly intercalated into the active layer 122, thereby improving the efficiency of intercalating the ions into the active structure 12, and thus enabling effective alleviation of the problem of ion precipitation at the corner portions 1102.

In some embodiments, refer to FIG. 5, FIG. 8, and other drawings. The adhesive layer 123 is a conductive adhesive layer and disposed more proximal to the first bent segments 1112 than the active layer 122.

The conductive adhesive layer refers to an adhesive layer made of conductive adhesive, and the conductive adhesive layer has conductive property.

In some possible designs, the active layer 122 is disposed on a side of the substrate 121 facing the first bent segments 1112, and the adhesive layer 123 is disposed on a side of the active layer 122 distal to the substrate 121. In some other possible designs, the active layer 122 is disposed on a side of the substrate 121 distal to the first bent segments 1112, and the adhesive layer 123 is disposed on a side of the substrate 121 distal to the active layer 122. On the basis of the above design, the adhesive layer 123 is disposed more proximal to the first bent segments 1112 than the active layer 122. When the active structure 12 is disposed between the first bent segments 1112 and the separator 113 adjacent thereto along the inner side, the adhesive layer 123 is bonded to the inner side of the first bent segments 1112. When the active structure 12 is disposed between the second bent segments 1122 and the separator 113 adjacent thereto along the outer side, the adhesive layer 123 is bonded to the inner side of the separator 113.

In this way, the adhesive layer 123 is disposed more proximal to the first bent segments 1112 than the active layer 122, such that the ions de-intercalated from the first bent segments 1112 can be intercalated into the active layer 122 after passing through the adhesive layer 123. Since the adhesive layer 123 is a conductive adhesive layer, the ions de-intercalated from the first bent segments 1112 can be rapidly intercalated into the active layer 122 under the conductive environment of the adhesive layer 123 on the basis that the active structure 12 can be stably bonded to the corner portions 1102, that is, the efficiency of the reaction between the ions and the active layer 122 can be improved, and thus the problem of ion precipitation at the corner portions 1102 can be effectively alleviated.

In some embodiments, the adhesive layer 123 may be made of an adhesive and conductive particles. The adhesive includes at least one of acrylic acid and polyester type materials, and the conductive particles include at least one of gold, silver, copper, aluminum, nickel, a gold oxide, a silver oxide, a copper oxide, an aluminum oxide, a nickel oxide, graphene, and graphite. By such arrangement, the adhesive layer 123 has a good adhesive property, such that the active structure 12 can be stably bonded to the corner portions 1102. Moreover, the adhesive layer 123 has a conductive capability, such that the efficiency of intercalating the ions de-intercalated from the first bent segments 1112 into the active structure 12 can be improved, thereby facilitating the alleviation of the problem of ion precipitation at the corner portions 1102.

In some embodiments, the adhesive layer 123 and the active layer 122 are disposed on two opposite sides of the substrate 121 respectively, the adhesive layer 123 is bonded to the separator 113, and the active layer 122 is in contact with the first bent segments 1112.

The active layer 122 is disposed on a side of the substrate 121 facing the first bent segments 1112, and in contact with the inner side of the first bent segments 1112. The adhesive layer 123 is disposed on a side of the substrate 121 distal to the active layer 122, and bonded to the outer side of the separator 113.

By such arrangement, the active layer 122 can be directly in contact with the inner side of the first bent segments 1112 on the basis that the active structure 12 can be bonded to the corner portions 1102, such that the ions de-intercalated from the first bent segments 1112 can be directly intercalated into the active layer 122, that is, the efficiency of intercalating the ions de-intercalated from the first bent segments 1112 into the active layer 12 can be improved, thereby facilitating the alleviation of the problem of ion precipitation at the corner portions 1102.

In some embodiments, refer to FIG. 9 and other drawings. FIG. 9 is an expanded cross-sectional view of an active structure 12 of an electrode assembly 11 according to still some other embodiments of the present application. The cross section shown in FIG. 9 is perpendicular to the Z axis (i.e., the first direction Z). That is, FIG. 9 is a schematic diagram of the active structure 12 of the structure shown in FIG. 4 in an expanded state. The active layer 122 has an adhesive property. The electrode assembly 11 further includes a separator 113, and the separator 113 is stacked between the positive electrode plate 111 and the negative electrode plate 112. A single active layer 122 is bonded to the first bent segments 1112, the separator 113, or the second bent segments 1122.

When at least part of the active structure 12 is disposed between the first bent segments 1112 and the separator 113 adjacent thereto along the inner side, and the active layer 122 is disposed on a side of the substrate 121 facing the first bent segments 1112, the active layer 122 is bonded to the inner side of the first bent segments 1112. When at least part of the active structure 12 is disposed between the first bent segments 1112 and the separator 113 adjacent thereto along the inner side, and the active layer 122 is disposed on a side of the substrate 121 distal to the first bent segments 1112, the active layer 122 is bonded to the outer side of the separator 113.

When at least part of the active structure 12 is disposed between the second bent segments 1122 and the separator 113 adjacent thereto along the outer side, and the active layer 122 is disposed on a side of the substrate 121 facing the first bent segments 1112, the active layer 122 is bonded to the inner side of the separator 113. When at least part of the active structure 12 is disposed between the second bent segments 1122 and the separator 113 adjacent thereto along the outer side, and the active layer 122 is disposed on a side of the substrate 121 distal to the first bent segments 1112, the active layer 122 is bonded to the outer side of the second bent segments 1122.

By such arrangement, the adhesive layer 123 does not need to be additionally provided, such that the active structure 12 features a very simple structure. Moreover, the ions de-intercalated from the first bent segments 1112 can be rapidly intercalated into the active layer 122. In addition, the space occupied by the active structure 12 in the electrode assembly 11 can be reduced, which is conducive to increasing the energy density of the battery 100.

In some embodiments, refer to FIG. 5, FIG. 7, and other drawings. The electrode assembly 11 further includes a separator 113, and the separator 113 is stacked between the positive electrode plate 111 and the negative electrode plate 112. The substrate 121 has an insulating property and is disposed between the first bent segments 1112 and the separator 113 adjacent thereto along the inner side. The active layer 122 is disposed on a side of the substrate 121 distal to the first bent segments 1112, and conductively connected to the negative electrode plate 112.

The active layer 122 is conductively connected to the negative electrode plate 112, which may be that the active layer 122 is conductively connected to the second bent segments 1122 of the negative electrode plate 112, or the active layer 122 is conductively connected to the second straight segments 1121 of the negative electrode plate 112, or the active layer 122 is conductively connected to the negative electrode tab 1123 of the negative electrode plate 112. As an example, the active layer 122 is conductively connected to the negative electrode tab 1123 by a metal piece 124 mentioned below.

The substrate 121 is disposed between the first bent segments 1112 and the separator 113 adjacent thereto along the inner side, and the active layer 122 is disposed on a side of the substrate 121 distal to the first bent segments 1112, such that the substrate 121 is disposed between the first bent segments 1112 and the active layer 122. Since the substrate 121 has an insulating property, an insulating effect between the active layer 122 and the first bent segments 1112 can be achieved.

Moreover, by allowing the active layer 122 to be conductively connected to the negative electrode plate 112, the active structure 12 can keep the same potential with the negative electrode plate 112, thereby resulting in a large potential difference between the positive electrode plate 111 and the active structure 12, which can increase the reaction rate of the ions and the active structure 12. In this way, the ions de-intercalated from the first bent segments 1112 can be intercalated into the active structure 12, and the ions can also be de-intercalated from the active structure to be intercalated into the first bent segments 1112, that is, the ions can be de-intercalated from and intercalated into the active structure 12.

On the basis of the above structure, in the charging process of the battery cell 10, the ions are de-intercalated from the positive electrode plate 111, migrate to the negative electrode plate 112, and are intercalated into the negative electrode plate 112. Specifically, the ions de-intercalated from the first straight segments 1111 may be intercalated into the second straight segments 1121, and the ions de-intercalated from the first bent segments 1112 may be partially intercalated into the second bent segments 1122, and partially intercalated into the active structure 12, and specifically, the ions are intercalated into the active layer 122 after passing through the substrate 121.

In the discharging process of the battery cell 10, ions are de-intercalated from the negative electrode plate 112 and intercalated into the positive electrode plate 111. Specifically, the ions de-intercalated from the second straight segments 1121 are intercalated into the first straight segments 1111, and the ions de-intercalated from the second bent segments 1122 are intercalated into the first bent segments 1112. Moreover, ions may also be de-intercalated from the active structure 12, and the ions may be intercalated into the first bent segments 1112.

That is, in the charging process of the battery 100, the ions are de-intercalated from the positive electrode plate 111 and intercalated into the negative electrode plate 112 and the active structure 12. In the discharging process of the battery cell 10, the ions are de-intercalated from the negative electrode plate 112 and the active structure 12 and intercalated into the positive electrode plate 111.

By such arrangement, the ions can be intercalated into the active structure 12 in the charging process of the battery cell 10 and de-intercalated from the active structure in the discharging process of the battery cell 10, such that consumption of the ions can be reduced on the basis that the problem of ion precipitation can be alleviated, and more ions can be intercalated and de-intercalated, thereby improving the utilization rate of the ions in the battery cell 10, improving the charging and discharging capacity of the battery cell 10, and thus improving the charging and discharging performance of the battery cell 10.

It should be noted that as shown in FIG. 5 and FIG. 7, when the active structure 12 is bonded to the inner side of the first bent segments 1112, the adhesive layer 123 is disposed on a side of the substrate 121 distal to the active layer 122 and bonded to the inner side of the first bent segments 1112. When the active structure 12 is bonded to the separator 113, the adhesive layer 123 is disposed on a side of the active layer 122 distal to the substrate 121 and bonded to the outer side of the separator 113. Based on this, the substrate 121 can achieve insulation between the first bent segments 1112 and the active layer 122.

It should be further noted that when at least part of the active structure 12 is disposed between the second bent segments 1122 and the separator 113 adjacent thereto along the outer side, the separator 113 can achieve insulation between the active structure 12 and the first bent segments 1112 regardless of whether the substrate 121 of the active structure 12 has an insulating property. Based on this, the active layer 122 and the negative electrode plate 112 can be conductively connected, that is, the ions can be de-intercalated from the active structure 12 in the discharging process of the battery cell 10 and intercalated into the first bent segments 1112, such that the charging and discharging capacity of the battery 100 can still be improved.

The active layer 122 being conductively connected to the negative electrode plate 112, in addition to being achieved by the conductive connection between the active layer and at least one of the second bent segments 1122, the second straight segments 1121, and the negative electrode tab 1123 of the negative electrode plate 112 through the metal piece 124 mentioned below, may also be achieved by direct contact between the active layer 122 and the second bent segments 1122,thereby realizing a conduction effect between the active layer 122 and the negative electrode plate 112.

It should be further noted that when at least part of the active structure 12 is disposed between the first bent segments 1112 and the separator 113 adjacent thereto along the inner side and the substrate 121 is not an insulating material, or when at least part of the active structure 12 is disposed between the first bent segments 1112 and the separator 113 adjacent thereto along the inner side and the active layer 122 is not conductively connected to the negative electrode plate 112, or at least part of the active structure 12 is disposed between the second bent segments 1122 and the separator 113 adjacent thereto along the outer side and the active structure 12 is not conductively connected to the negative electrode plate 112, in the charging process of the battery 100, part of the ions de-intercalated from the first bent segments 1112 are intercalated into the second bent segments 1122 and another part of the ions are intercalated into the active structure 12 and consumed by the active structure 12, thereby enabling the alleviation of the problem of ion precipitation.

In some embodiments, the electrode assembly 11 further includes a separator 113, and the separator 113 is stacked between the positive electrode plate 111 and the negative electrode plate 112. The active structure 12 includes the active layer 122, the active layer 122 is configured to intercalate ions, and at least part of the active layer 122 is disposed between the first bent segments 1112 and the second bent segments 1122 adjacent thereto along the inner side and disposed on the separator 113.

The active layer 122 is a component configured to intercalate ions in the active structure 12.

It can be understood that the separator 113 serves as the substrate 121 of the active layer 122, that is, the active layer 122 may be formed directly on the separator 113.

In some possible designs, the active layer 122 is disposed between the first bent segments 1112 and the second bent segments 1122 adjacent thereto along the inner side and disposed on the outer side of the separator 113.

In some other possible designs, the active layer 122 is disposed between the second bent segments 1122 and the separator 113 adjacent thereto along the outer side and disposed on the inner side of the separator 113.

By directly providing the active layer 122 on the separator 113, the arrangement of the substrate 121 is not required for the active structure 12. This can reduce the volume and mass of the active structure 12, and thus facilitate the improvement of the energy density of the battery 100.

In some embodiments, the active layer 122 may also be directly disposed on the inner side the first bent segments 1112 or may also be directly disposed on the outer side of the second bent segments 1122.

In some embodiments, a material of the active layer 122 includes an active material, a conductive agent, and a binder.

The active material may be graphite, or may be high-capacity hard carbon, silicon carbon, silicon oxide, titanium oxide, or the like. The conductive agent may be conductive carbon, carbon nanotubes, graphene, or the like. In this way, the ions may be intercalated into the active layer 122. Moreover, the ions may also be de-intercalated from the active layer 122.

The binder may be water-based or oil-based, such as styrene-butadiene rubber, polyvinylidene difluoride, carboxymethyl cellulose, or the like. In this way, the active layer 122 may be directly formed on the substrate 121 or the separator 113, which is conducive to the formation of the active layer 122 on the substrate 121 or the separator 113.

By such arrangement, the active layer 122 has a property of intercalating the ions, such that the ions can be intercalated to alleviate the problem of ion precipitation at the corner portions 1102. Moreover, the formation of the active layer 122 is also facilitated.

Here, it should be noted that by increasing the proportion of the binder in the active layer 122, the active layer 122 may have a certain adhesive property, such that the active layer 122 can be directly bonded to the first bent segments 1112, the separator 113, or the second bent segments 1122.

In some embodiments, the electrode assembly 11 further includes a separator 113, and the separator 113 is stacked between the positive electrode plate 111 and the negative electrode plate 112. At least part of the active structure 12 is disposed between the second bent segments 1122 and the separator 113 adjacent thereto along the outer side, and conductively connected to the negative electrode plate 112.

It can be understood that the active structure 12 includes an active layer 122, and the active layer 122 is disposed between the second bent segments 1122 and the separator 113 adjacent thereto along the outer side, and conductively connected to the negative electrode plate 112.

In this way, the ions de-intercalated from the first bent segments 1112 can be intercalated into the active structure 12 in the charging process of the battery cell 10, and can also be de-intercalated in the discharging process of the battery cell 10 and intercalated into the first bent segments 1112, such that the charging and discharging capacity of the battery cell 10 can be improved.

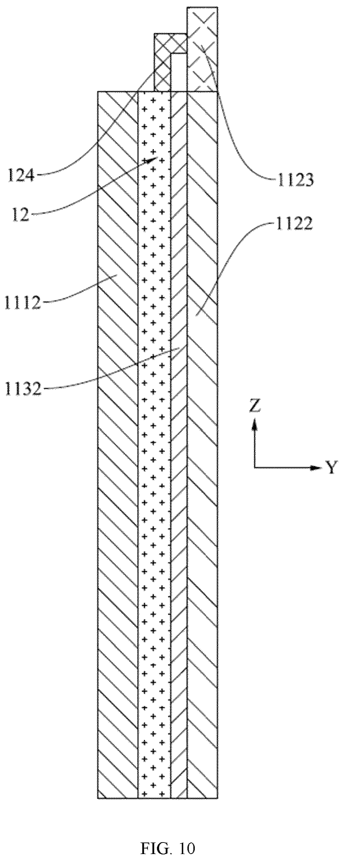

In some embodiments, refer to FIG. 6, FIG. 10, and other drawings. FIG. 10 is a partial cross-sectional view of a corner portion 1102 of an electrode assembly 11 and an active structure of a battery cell 10 according to some embodiments of the present application, and the cross section shown in FIG. 10 is perpendicular to the X axis (i.e., the second direction X). The active structure 12 includes an active layer 122, and the active layer 122 are configured to intercalate ions. At least part of the active layer 122 is disposed between the first bent segments 1112 and the second bent segments 1122 adjacent thereto along the inner side.

As shown in FIG. 10, the active structure 12 further includes a metal piece 124 disposed on the active layer 122, and the metal piece 124 is conductively connected to the negative electrode plate 112. Or, the active layer 122 is in conductive contact with the second bent segments 1122.

The metal piece 124 may be a copper foil, an aluminum foil, or the like.

As shown in FIG. 6 to FIG. 9, the metal piece 124 is disposed on the active layer 122 and conductively connected to the active layer 122.

The metal piece 124 is conductively connected to the negative electrode plate 112, which may be that the metal piece 124 is conductively connected to the second straight segments 1121 of the negative electrode plate 112, or the metal piece 124 is conductively connected to the second bent segments 1122 of the negative electrode plate 112, or, as shown in FIG. 10, the metal piece 124 is conductively connected to the negative electrode tab 1123 of the negative electrode plate 112.

The metal piece 124 and the negative electrode plate 112 may be conductively connected by welding, bonding, or the like.

By allowing the metal piece 124 to be conductively connected to the negative electrode plate 112, or allowing the active layer 122 to be in conductive contact with the second bent segments 1122, the active structure 12 can keep the same potential with the negative electrode plate 112, which enlarges the potential difference between the positive electrode plate 111 and the active structure 12, and increases the reaction rate of the ions and the active structure 12, thereby improving the efficiency of intercalating the ions de-intercalated from the first bent segments 1112 into the active structure 12.

It can be understood that the active layer 122 is conductively connected to the negative electrode plate 112, which may be that the active layer 122 is conductively connected to the second straight segments 1121 of the negative electrode plate 112, or the active layer 122 is conductively connected to the second bent segments 1122 of the negative electrode plate 112, or the active layer 122 is conductively connected to the negative electrode tab 1123 of the negative electrode plate 112.

When the active layer 122 is disposed between the first bent segments 1112 and the separator 113 adjacent thereto along the inner side, the active layer 122 may achieve conductive connection to the negative electrode plate 112 by the metal piece 124. Specifically, the metal piece 124 is conductively connected to the active layer 122. Moreover, the metal piece 124 is conductively connected to the second straight segments 1121; or the metal piece 124 is conductively connected to the second bent segments 1122; or the metal piece 124 is conductively connected to the negative electrode tab 1123.

When the active layer 122 is disposed between the second bent segments 1122 and the separator 113 adjacent thereto along the outer side, the active layer 122, in addition to achieving conductive connection to the negative electrode plate 112 by the metal piece 124, the active layer 122 may also be directly in conductive contact with the second bent segments 1122. The manner in which the active layer 122 achieves conductive conduction to the negative electrode plate 112 by the metal piece 124 is the same as the explanation in the previous paragraph, which is not repeated here.

In some embodiments, refer to FIG. 5 and other drawings. An orthographic projection of the active structure 12 on the first bent segments 1112 covers the first bent segments 1112 along the winding direction of the positive electrode plate 111.

In some embodiments, refer to FIG. 10 and other drawings. The orthographic projection of the active structure 12 on the first bent segments 1112 covers the first bent segments 1112 along the first direction Z, and the positive electrode plate 111 and the negative electrode plate 112 are wound around the first axis L parallel to the first direction Z.

In some embodiments, referring to FIG. 5 and FIG. 10 together with other drawings, the orthographic projection of the active structure 12 on the first bent segments 1112 covers the first bent segments 1112 along the winding direction of the positive electrode plate 111, the orthographic projection of the active structure 12 on the first bent segments 1112 covers the first bent segments 1112 along the first direction Z, and the positive electrode plate 111 and the negative electrode plate 112 are wound around the first axis L parallel to the first direction Z.

By adopting the above technical solutions, the active structure 12 can cover the inner side of the first bent segments 1112 as much as possible, such that the ions de-intercalated from the first bent segments 1112 can be better intercalated, and thus the problem of ion precipitation at the corner portions 1102 can be alleviated.

In some embodiments, refer to FIG. 6, FIG. 9, and other drawings. The active structure 12 has a dimension of 10 mm to 20 mm along the winding direction of the positive electrode plate 111.

As shown in FIG. 6 to FIG. 9, along the winding direction of the positive electrode plate 111, the dimension of the active structure 12 is a first dimension H1 of the active structure 12 in the expanded state in FIG. 6 to FIG. 9, and the first dimension H1 is 10 mm to 20 mm, specifically, 10 mm, 11 mm, 12 mm, 13 mm, 14 mm, 15 mm, 16 mm, 17 mm, 18 mm, 19 mm, or the like.

By such arrangement, the active structure 12 can better cover the inner side of the first bent segments 1112 along the winding direction of the positive electrode plate 111, such that the ions de-intercalated from the first bent segments 1112 can be better intercalated, and thus the problem of ion precipitation at the corner portions 1102 can be alleviated, which is conducive to improving the charging and discharging performance of the battery cell 10.

In some embodiments, refer to FIG. 5 and other drawings. The active structure 12 is a sheet, and the active structure 12 has a thickness dimension ranging from 20 µm to 40 µm.

The active structure 12 is a sheet, which means that the active structure 12 is of a sheet-like structure. Based on this, the active structure 12, the positive electrode plate 111, the negative electrode plate 112, and the separator 113 are all of a sheet-like structure.

In the electrode assembly 11, the thickness direction of the positive electrode plate 111, the thickness direction of the negative electrode plate 112, and the thickness direction of the separator 113 are parallel, that is, the positive electrode plate 111, the negative electrode plate 112, and the separator 113 are stacked along the above thickness direction and parallel to each other. The active structure 12 is a sheet, such that the active structure 12 may be disposed in parallel between the first bent segments 1112 and the second bent segments 1122, that is, the thickness direction of the active structure 12 is parallel to the thickness direction of the positive electrode plate 111, the thickness direction of the negative electrode plate 112, and the thickness direction of the separator 113.

The thickness dimension of the active structure 12 is a second dimension H2 as shown in FIG. 5 and FIG. 6 to FIG. 9, and the second dimension H2 may be 21 µm, 22 µm, 24 µm, 26 µm, 28 µm, 30 µm, 32 µm, 35 µm, 37 µm, 39 µm, or the like.

By such arrangement, the thickness of the active structure 12 is designed reasonably, and the thickness of the active structure 12 is made to be small on the basis that the ions de-intercalated from the first bent segments 1112 can be efficiently intercalated, such that the space occupied by the active structure 12 in the electrode assembly 11 is reduced as much as possible, thereby being conducive to maintaining a high energy density of the battery 100.

Referring to FIG. 2 and FIG. 3, the battery 100 provided by the embodiment of the present application includes a battery cell 10. The battery cell 10 in the embodiment is the same as the battery cell 10 in the previous embodiment. Reference may be made to the relevant descriptions of the battery cell 10 in the previous embodiment for details, which are not repeated here.

According to the battery 100 provided by the embodiments of the present application, the problem of ion precipitation of the battery cell 10 can be alleviated by adopting the battery cell 10 involved in each embodiment described above, thereby being conducive to improving the charging and discharging cycle performance and the reliability of the battery 100.

Referring to FIG. 1, an electric device provided by an embodiment of the present application includes a battery cell 10 or a battery 100. The battery cell 10 and the battery 100 in the embodiment are the same as the battery cell 10 and the battery 100 in the previous embodiment. Reference may be made to the relevant descriptions of the battery cell 10 and the battery 100 in the previous embodiment for details, which are not repeated here.

The electric device provided by the embodiment of the present application is conducive to improving the charging and discharging cycle performance and the reliability of the battery 100 by adopting the battery cell 10 or the battery 100 involved above.

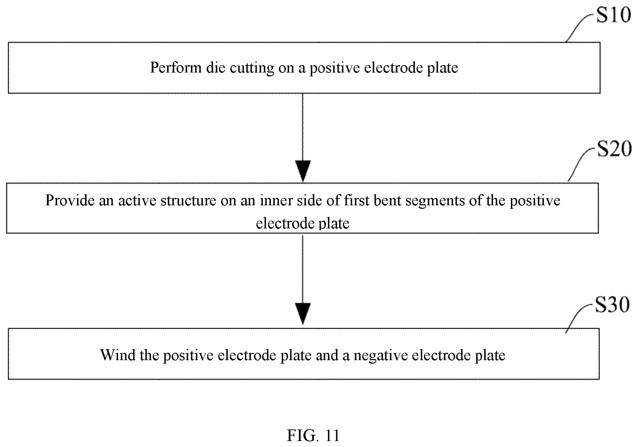

Refer to FIG. 11 and other drawings. An embodiment of the present application further provides a processing method for a battery cell 10. The battery cell 10 in the embodiment is the same as the battery cell 10 in the previous embodiment. Reference may be made to the relevant descriptions of the battery cell 10 in the previous embodiment for details, which are not repeated here. The processing method for the battery cell 10 includes the following steps:

In S10, die cutting is performed on the positive electrode plate 111.

In this step, an incoming material of the positive electrode plate 111 is subjected to die cutting to obtain the positive electrode plate 111.

In S20, the active structure 12 is provided on the inner side of the first bent segments 1112 of the positive electrode plate 111.

In this step, the active structure 12 may be disposed at least on the inner side of the first of the first bent segments 1112 to the third of the first bent segments 1112 of the positive electrode plate 111, and
in this step, the active structure 12 may be bonded to the inner side of the first bent segments 1112.

In S30, the positive electrode plate 111 and the negative electrode plate 112 are wound.

In this step, the positive electrode plate 111 provided with the active structure 12 and the negative electrode plate 112 are wound, such that a matching structure of the electrode assembly 11 and the active structure 12 can be obtained, and the active structure 12 can be disposed between the first bent segments 1112 and the second bent segments 1122 adjacent thereto along the inner side. Based on this, the problem of ion precipitation at the corner portions 1102 of the electrode assembly 11 can be alleviated.

It should be noted that before step S 30, die cutting may be performed on the negative electrode plate 112, that is, die cutting is performed on an incoming material of the negative electrode plate 112 to obtain the negative electrode plate 112.

According to the processing method for the battery cell 10 provided by the embodiment of the present application, the active structure 12 may be disposed on the positive electrode plate 111 after the positive electrode plate 111 is subjected to die cutting and before the positive electrode plate is wound, such that the active structure 12 can be disposed between the first bent segments 1112 and the second bent segments 1122 adjacent thereto along the inner side, thereby alleviating the problem of ion precipitation at the corner portions 1102 of the battery assembly 11.

An embodiment of the present application further provides a processing method for a battery cell 10. The battery cell 10 in the embodiment is the same as the battery cell 10 in the previous embodiment. Reference may be made to the relevant descriptions of the battery cell 10 in the previous embodiment for details, which are not repeated here. The processing method for the battery cell 10 includes the following steps:

In S40, die cutting is performed on the negative electrode plate 112.

In this step, an incoming material of the negative electrode plate 112 is subjected to die cutting to obtain the negative electrode plate 112.

In S50, the active structure 12 is provided on the outer side of the second bent segments 1122 of the negative electrode plate 112.

In this step, the active structure 12 may be bonded to the outer side of the second bent segments 1122.

In S60, the positive electrode plate 111 and the negative electrode plate 112 are wound.

In this step, the positive electrode plate 111 provided with the active structure 12 and the negative electrode plate 112 are wound, such that a matching structure of the electrode assembly 11 and the active structure 12 can be obtained, and the active structure 12 can be disposed between the first bent segments 1112 and the second bent segments 1122 adjacent thereto along the inner side. Based on this, the problem of ion precipitation at the corner portions 1102 of the electrode assembly 11 can be alleviated.

It should be noted that before step S 60, die cutting may be performed on the positive electrode plate 111, that is, die cutting is performed on an incoming material of the positive electrode plate 111 to obtain the positive electrode plate 111.

According to the processing method for the battery cell 10 provided by the embodiment of the present application, the active structure 12 may be disposed on the negative electrode plate 112 after the negative electrode plate 112 is subjected to die cutting and before the negative electrode plate is wound, such that the active structure 12 can be disposed between the first bent segments 1112 and the second bent segments 1122 adjacent thereto along the inner side, thereby alleviating the problem of ion precipitation at the corner portions 1102 of the battery assembly 11.

An embodiment of the present application further provides a processing method for a battery cell 10. The battery cell 10 in the embodiment is the same as the battery cell 10 in the previous embodiment. Reference may be made to the relevant descriptions of the battery cell 10 in the previous embodiment for details, which are not repeated here. The processing method for the battery cell 10 includes the following steps:

In S70, the positive electrode plate 111 and the negative electrode plate 112 are wound, and the active structure 12 is provided between the inner side of the first bent segments 1112 of the positive electrode plate 111 and the outer side of the second bent segments 1122 of the negative electrode plate 112 in the process of winding the positive electrode plate 111 and the negative electrode plate 112.

It can be understood that the active structure 12 is disposed in the electrode assembly 11 in the winding process of the electrode assembly 11, such that the active structure 12 can be disposed between the first bent segments 1112 and the second bent segments 1122 adjacent thereto along the inner side. By such arrangement, the problem of ion precipitation at the corner portions 1102 of the battery assembly 11 can be alleviated.

The above three processing methods for the battery cell 10 are used to make the operation of arranging the active structure 12 on the electrode assembly 11 simple and achieve low cost and less time consumption.

As one embodiment of the present application, as shown in FIG. 3 to FIG. 6, the battery cell 10 includes an electrode assembly 11 and an active structure 12. The electrode assembly 11 includes a positive electrode plate 111, a negative electrode plate 112, and a separator 113, the positive electrode plate 111 and the negative electrode plate 112 are stacked and wound, and the separator 113 is disposed between the positive electrode plate 111 and the negative electrode plate 112. The electrode assembly 11 includes a straight portion 1101 and two corner portions 1102, and the two corner portions 1102 are disposed on two opposite sides of the straight portion 1101 respectively. The positive electrode plate 111 includes first straight segments 1111 and first bent segments 1112, and the first bent segments 1112 are connected to the first straight segments 1111. The negative electrode plate 112 includes second straight segments 1121 and second bent segments 1122, and the second bent segments 1122 are connected to the second straight segments 1121. The separator 113 includes third straight segments 1131 and third bent segments 1132, and the third bent segments 1132 are connected to the third straight segments 1131. The first straight segments 1111 and the second straight segments 1121 are alternately stacked, and the third straight segments 1131 are stacked between the first straight segments 1111 and the second straight segments 1121. The first straight segments 1111, the second straight segments 1121, and the third straight segments 1131 form the above straight portion 1101 of the electrode assembly 11. The first bent segments 1112 and the second bent segments 1122 are alternately stacked, and the third bent segments 1132 are stacked between the first bent segments 1112 and the second bent segments 1122. The first bent segments 1112, the second bent segments 1122, and the third bent segments 1132 form the above corner portions 1102 of the electrode assembly 11. An active structure 12 is disposed between the first bent segments 1112 and the separator 113 adjacent thereto along the inner side, and configured to intercalate ions de-intercalated from the first bent segments 1112.

The active structure 12 includes the substrate 121, the active layer 122, and the adhesive layer 123, the active layer 122 is disposed on one side of the substrate 121, the adhesive layer 123 is disposed on the side of the active layer 122 distal to the substrate 121, and the adhesive layer 123 is bonded to the inner side of the first bent segments 1112.

In the charging process of the battery 100, part of the ions de-intercalated from the positive electrode plate 111 are intercalated into the negative electrode plate 112 and another part of the ions are intercalated into the active structure 12, such that the active structure 12 consumes part of the ions, and the problem of ion precipitation caused by the ions excessively reaching the second bent segments 1122 of the negative electrode plate 112 can be alleviated.

The above are only preferred embodiments of the present application, and are not intended to limit the present application. Any modification, equivalent substitution, improvement, and the like made within the spirit and principle of the present application shall all fall within the protection scope of the present application.

## Claims

1. A battery cell (10), comprising:
an electrode assembly (11), comprising a positive electrode plate (111) and a negative electrode plate (112), wherein the positive electrode plate (111) and the negative electrode plate (112) are stacked and wound; the electrode assembly (11) comprises a straight portion (1101) and two corner portions (1102) disposed on two opposite sides of the straight portion (1101) respectively; the positive electrode plate (111) comprises first straight segments (1111) and first bent segments (1112) connected to the first straight segments (1111), the negative electrode plate (112) comprises second straight segments (1121) and second bent segments (1122) connected to the second straight segments (1121), the first straight segments (1111) and the second straight segments (1121) are alternately stacked to form the straight portion (1101), and the first bent segments (1112) and the second bent segments (1122) are alternately stacked to form the corner portions (1102); and
an active structure (12), at least part of the active structure being disposed between the first bent segments (1112) and the second bent segments (1122) adjacent thereto along an inner side, and configured to intercalate ions.

2. The battery cell (10) according to claim 1, wherein the positive electrode plate (111) comprises three or more first bent segments (1112) spaced apart from each other along a winding direction of the positive electrode plate (111); and along the winding direction of the positive electrode plate (111), the active structure (12) is disposed at least between an inner side of the first of the first bent segments (1112) to an inner side of the third of the first bent segments (1112) and corresponding adjacent second bent segments (1122).

3. The battery cell (10) according to claim 1 or 2, wherein the electrode assembly (11) further comprises a separator (113), and the separator (113) is stacked between the positive electrode plate (111) and the negative electrode plate (112); and
the active structure (12) is disposed between the first bent segments (1112) and the separator (113) adjacent thereto along the inner side, and/or the active structure (12) is disposed between the second bent segments (1122) and the separator (113) adjacent thereto along an outer side.

4. The battery cell (10) according to any one of claims 1 to 3, wherein the active structure (12) comprises a substrate (121) and an active layer (122) disposed on the substrate (121) and configured to intercalate ions, and at least part of the substrate (121) and at least part of the active layer (122) are both disposed between the first bent segments (1112) and the second bent segments (1122) adjacent thereto along the inner side.

5. The battery cell (10) according to claim 4, wherein the active structure (12) further comprises an adhesive layer (123), and the substrate (121) and/or the active layer (122) are/is provided with the adhesive layer (123); the electrode assembly (11) further comprises the separator (113), and the separator (113) is stacked between the positive electrode plate (111) and the negative electrode plate (112); and
at least part of the active structure (12) is disposed between the first bent segments (1112) and the separator (113) adjacent thereto along the inner side, and bonded to the first bent segments (1112) and/or the separator (113) by the adhesive layer (123), or at least part of the active structure (12) is disposed between the second bent segments (1122) and the separator (113) adjacent thereto along the outer side, and bonded to the second bent segments (1122) and/or the separator (113) by the adhesive layer (123).

6. The battery cell (10) according to claim 5, wherein the adhesive layer (123) comprises a plurality of adhesive portions (1231) spaced apart from each other on the active layer (122) or the substrate (121); and the adhesive portions (1231) of the single adhesive layer (123) are configured to bond the first bent segments (1112), the separator (113), or the second bent segments (1122).

7. The battery cell (10) according to claim 6, wherein the adhesive portions (1231) are disposed on a side of the active structure (12) proximal to the first bent segments (1112).

8. The battery cell (10) according to any one of claims 5 to 7, wherein the adhesive layer (123) is disposed on the active layer (122) and bonded to the first bent segments (1112).

9. The battery cell (10) according to any one of claims 5 to 8, wherein the adhesive layer (123) is a conductive adhesive layer and disposed more proximal to the first bent segments (1112) than the active layer (122).

10. The battery cell (10) according to any one of claims 5 to 7, wherein the adhesive layer (123) and the active layer (122) are disposed on two opposite sides of the substrate (121) respectively, the adhesive layer (123) is bonded to the separator (113), and the active layer (122) is in contact with the first bent segments (1112).

11. The battery cell (10) according to claim 4, wherein the active layer (122) has an adhesive property; the electrode assembly (11) further comprises the separator (113), and the separator (113) is stacked between the positive electrode plate (111) and the negative electrode plate (112); and the single active layer (122) is bonded to the first bent segments (1112), the separator (113), or the second bent segments (1122).

12. The battery cell (10) according to any one of claims 4 to 11, wherein the electrode assembly (11) further comprises the separator (113), and the separator (113) is stacked between the positive electrode plate (111) and the negative electrode plate (112); and the substrate (121) has an insulating property and is disposed between the first bent segments (1112) and the separator (113) adjacent thereto along the inner side, and the active layer (122) is disposed on a side of the substrate (121) distal to the first bent segments (1112) and conductively connected to the negative electrode plate (112).

13. The battery cell (10) according to any one of claims 1 to 3, wherein the electrode assembly (11) further comprises the separator (113), and the separator (113) is stacked between the positive electrode plate (111) and the negative electrode plate (112); and the active structure (12) comprises an active layer (122) configured to intercalate ions, and at least part of the active layer (122) is disposed between the first bent segments (1112) and the second bent segments (1122) adjacent thereto along the inner side, and disposed on the separator (113).

14. The battery cell (10) according to any one of claims 4 to 13, wherein a material of the active layer (122) comprises an active material, a conductive agent, and a binder.

15. The battery cell (10) according to any one of claims 1 to 14, wherein the electrode assembly (11) further comprises the separator (113), and the separator (113) is stacked between the positive electrode plate (111) and the negative electrode plate (112); and
at least part of the active structure (12) is disposed between the second bent segments (1122) and the separator (113) adjacent thereto along the outer side, and conductively connected to the negative electrode plate (112).

16. The battery cell (10) according to any one of claims 1 to 15, wherein the active structure (12) comprises the active layer (122) configured to intercalate ions, and at least part of the active layer (122) is disposed between the first bent segments (1112) and the second bent segments (1122) adjacent thereto along the inner side;
the active structure (12) further comprises a metal piece (124) disposed on the active layer (122), and the metal piece (124) is conductively connected to the negative electrode plate (112); or, the active layer (122) is in conductive contact with the second bent segments (1122).

17. The battery cell (10) according to any one of claims 1 to 16, wherein an orthographic projection of the active structure (12) on the first bent segments (1112) covers the first bent segments (1112) along the winding direction of the positive electrode plate (111);
and/or the orthographic projection of the active structure (12) on the first bent segments (1112) covers the first bent segments (1112) along a first direction (Z), and the positive electrode plate (111) and the negative electrode plate (112) are wound around a first axis (L) parallel to the first direction (Z).

18. The battery cell (10) according to any one of claims 1 to 17, wherein the active structure (12) has a dimension of 10 mm to 20 mm along the winding direction of the positive electrode plate (111).

19. The battery cell (10) according to any one of claims 1 to 18, wherein the active structure (12) is a sheet and has a thickness dimension ranging from 20 µm to 40 µm.

20. A battery (100), comprising the battery cell (10) according to any one of claims 1 to 19.

21. An electric device, comprising the battery cell (10) according to any one of claims 1 to 19, or the battery (100) according to claim 20.

22. A processing method for the battery cell (10) according to any one of claims 1 to 19, comprising:
performing die cutting on the positive electrode plate (111);
providing the active structure (12) on an inner side of the first bent segments (1112) of the positive electrode plate (111); and
winding the positive electrode plate (111) and the negative electrode plate (112).

23. A processing method for the battery cell (10) according to any one of claims 1 to 19, comprising:
performing die cutting on the negative electrode plate (112);
providing the active structure (12) on an outer side of the second bent segments (1122) of the negative electrode plate (112); and
winding the positive electrode plate (111) and the negative electrode plate (112).

24. A processing method for the battery cell (10) according to any one of claims 1 to 19, comprising:
winding the positive electrode plate (111) and the negative electrode plate (112), and providing the active structure (12) between an inner side of the first bent segments (1112) of the positive electrode plate (111) and an outer side of the second bent segments (1122) of the negative electrode plate (112) in the process of winding the positive electrode plate (111) and the negative electrode plate (112).
